# EUROPEAN PATENT APPLICATION

(11) **EP 3 486 846 A1**
(43) Date of publication of application: **22.05.2019**
(21) Application number: 18206753.8
(22) Date of filing: 16.11.2018
(51) Int. Cl.: G06Q 10/00, G06Q 10/08

(54) **DELIVERY ASSISTANCE DEVICE, DELIVERY ASSISTANCE METHOD, AND NON-TRANSITORY COMPUTER-READABLE STORAGE MEDIUM STORING DELIVERY ASSISTANCE PROGRAM**

(30) Priority: 17.11.2017 JP 2017222332
(71) Applicant: Toyota Jidosha Kabushiki Kaisha, Toyota-shi, Aichi 471-8571 (JP)
(72) Inventor: FUJIWARA, Yasuhisa, Toyota-shi, Aichi-ken 471-8571 (JP)
(74) Representative: Cabinet Beau de Loménie

(57) **Abstract**

A delivery assistance device (30) assists in a delivery service in which a cabin of a vehicle (10) used by a user is designated as a delivery destination of luggage. The delivery assistance device (30) includes a decision device (3208, 3209) configured to decide at least one of (i) a provision aspect including at least one of (a) whether or not information on the vehicle (10) is provided to a delivery company and (b) a degree of limitation on the information to be provided and (ii) a contact aspect including at least one of (a) whether or not contact between the delivery company and the user is available and (b) contact method, and an assistance unit (3210, 3211) configured to perform at least one of (i) providing information on the vehicle (10) to the delivery company according to the provision aspect and (ii) mediating contact between the delivery company and the user according to the contact aspect.

## Description

### BACKGROUND OF THE INVENTION

### 1. Field of the Invention

The present invention relates to a delivery assistance device, a delivery assistance method, and a non-transitory computer-readable storage medium storing a delivery assistance program.

### 2. Description of Related Art

For example, a mechanism for using a vehicle cabin of a vehicle such as a trunk as a delivery destination of luggage is disclosed (see Japanese Unexamined Patent Application Publication No. 2006-206225 (JP 2006-206225 A) or the like).

Specifically, when a predetermined transmission signal is transmitted from a terminal carried by a deliverer to a vehicle and accordingly, authentication based on authentication information (key information) included in the transmission signal is successful on the vehicle side, a trunk of the vehicle is unlocked and a deliverer can deliver luggage in the trunk. Accordingly, a delivery company can provide a customer with a delivery service in which a vehicle cabin such as the trunk of the vehicle can be designated as a delivery destination (hereinafter referred to as a "vehicle cabin delivery service"). Similarly, for example, the delivery company can also provide a delivery service in which the inside of a lockable and unlockable building or facility used by a user, such as a house or a rental villa (hereinafter referred to as a service for delivery to a house or the like) can be designated as a delivery destination to a customer.

### SUMMARY OF THE INVENTION

In order to smoothly operate the delivery service as described above, information on a vehicle, a building, a facility, or the like corresponding to a delivery destination of luggage (hereinafter referred to as a "vehicle or the like" for convenience) may be provided to the delivery company in advance. For example, when a vehicle cabin such as a trunk of the vehicle is designated as a delivery destination, position information of the vehicle, or the like may be provided to the delivery company since the vehicle is a moving body. For example, when the inside of a building such as a house or a facility such as a conference room is designated as the delivery destination, information on features of a structure or appearance of the building or the facility for the deliverer to specify a delivery place, information on the surroundings of the building or the facility, or the like may be provided to the delivery company.

However, when various types of information related to the vehicle or the like, or the user are handed over to the delivery company regardless of whether or not the information is needed for the delivery company, the information is unlikely to be sufficiently protected from the viewpoint of privacy of the user. For example, when the delivery company can receive the information on the vehicle used by the user regardless of whether or not provision of the information is needed for delivery, the delivery company is likely to always ascertain a use situation of the vehicle of the user or the like and the information is unlikely to be sufficiently protected from the viewpoint of privacy of the user. For example, when the delivery company can receive provision of information on a building or a facility used by the user regardless of whether or not the information is needed for delivery, a third party not related to a deliverer is given an opportunity to see the information on the building or the facility used by the user, and the information is unlikely to be sufficiently protected from the viewpoint of privacy of the user. For example, when contact information of the user is handed over to the delivery company regardless of whether or not the information is needed for delivery, contact with the user is enabled regardless of the delivery, and the information is unlikely to be sufficiently protected from the viewpoint of privacy of the user.

The present invention provides a delivery assistance device, a delivery assistance method, and a non-transitory computer-readable storage medium storing a delivery assistance program capable of causing a delivery service in which the inside of a vehicle or the like used by a user can be designated as a delivery destination of luggage to be established while taking privacy of the user into consideration.

A first aspect of the present invention relates to a delivery assistance device that assists in a delivery service in which a cabin of a vehicle used by a user is designated as a delivery destination of luggage. The delivery assistance device includes a decision unit and an assistance unit. The decision unit is configured to decide at least one of (i) a provision aspect including at least one of (a) whether or not information on the vehicle is provided to a company operating the delivery service and (b) a degree of limitation on the information to be provided and (ii) a contact aspect including at least one of (a) whether or not contact between the company and the user is available and (b) contact method between the company and the user, based on at least one of position information of the vehicle and a progress situation for the luggage in a process of the delivery service. The assistance unit is configured to perform at least one of (i) providing information on the vehicle to the company according to the provision aspect decided by the decision unit and (ii) mediating contact between the company and the user according to the contact aspect decided by the decision unit.

According to the first aspect of the present invention, the delivery assistance device can determine whether or not the provision of the information on the vehicle or the like or the contact with the user who is a requester is needed based on the position information of the vehicle and the progress situation for luggage in the process of the delivery service. For example, when the vehicle is moving, the delivery assistance device cannot settle whether or not the luggage is to be delivered to the vehicle as a delivery destination. Therefore, in the situation described above, the delivery assistance device can determine that provision of information on the vehicle is not needed for the delivery company, based on the position information of the vehicle. For example, when the vehicle is at a designated position designated by the user, the delivery assistance device can determine that intentional contact with the user is not needed since the deliverer solely has to be directed to the designated position. Therefore, in the situation described above, the delivery assistance device can determine that the contact with the user is not needed for the delivery company based on the position information of the vehicle. For example, there may be a situation in which a luggage delivery request has been made, but the luggage has not been brought to the business office or the luggage has not been collected at the business office. Therefore, in the situation as described above, the delivery assistance device can determine that the information on the vehicle or the like or the contact with the user is not needed for the delivery company, based on the progress situation for the luggage in the process of the delivery service. Therefore, the delivery assistance device can make the provision aspect of information on the vehicle or the like different or make the contact aspect between the delivery company and the user different according to whether or not the information on the vehicle or the like or the contact with the user is needed for the delivery company. Accordingly, the delivery assistance device can provide the information on the vehicle or the like, which is required to the delivery company or mediate the needed contact with the user. The delivery assistance device can suppress a situation in which the information on the vehicle or the like is provided to the delivery company without any limitation or the delivery company contacts the user using general-purpose means (for example, a telephone line) when the information on the vehicle or the like is not needed. Therefore, the delivery assistance device can cause a delivery service in which the inside of the vehicle or the like used by the user can be designated as the delivery destination of the luggage to be established while taking the privacy of the user into consideration.

In the delivery assistance device according to the first aspect of the present invention, the decision unit may decide that the assistance unit provides a position information of the vehicle to the company when the vehicle is stopped.

According to the first aspect of the present invention, in the vehicle cabin delivery service, the delivery assistance device can provide the position information of the vehicle designated as the delivery destination to the delivery company solely when the vehicle is stopped. That is, when the vehicle is moving, the delivery assistance device enables limited position information of the vehicle to be provided or the position information of the vehicle itself not to be provided. Therefore, the delivery assistance device can specifically cause a delivery service in which the inside of the vehicle or the like used by the user can be designated as the delivery destination of the luggage to be established while taking the privacy of the user into consideration.

The delivery assistance device according to the first aspect of the present invention may further include a transmission unit configured to transmit a notification indicating that the vehicle is moving to a predetermined external device belonging to the company when the vehicle is moving.

According to the first aspect of the present invention, in a situation in which the delivery assistance device cannot provide the position information of the vehicle or the like to the delivery company, the delivery assistance device can cause the delivery company to ascertain that the delivery company cannot receive information of the vehicle information since the vehicle is moving.

In the delivery assistance device according to the first aspect of the present invention, the transmission unit may transmit position information of a place at which the vehicle has last been stopped, to the external device when the vehicle is moving.

According to the first aspect of the present invention, the delivery assistance device can cause the delivery company to ascertain a place from which the vehicle is moving, which is a starting point, in a situation in which the delivery assistance device cannot provide the position information of the vehicle or the like to the delivery company.

In the delivery assistance device according to the first aspect of the present invention, the transmission unit may transmit information on whether or not the vehicle is approaching a position designated by the user in advance to the external device when the vehicle is moving.

According to the first aspect of the present invention, the delivery assistance device can cause the delivery company to ascertain whether or not the vehicle is approaching the designated position in a situation in which the delivery assistance device cannot provide the position information of the vehicle or the like to the delivery company. Therefore, for example, when the vehicle is approaching the designated position, the vehicle is likely to be parked at the designated position, and therefore, the delivery company can settle the vehicle as the delivery destination, for example, by changing the order of delivery. Accordingly, the delivery assistance device can achieve improvement of efficiency of the delivery work at the delivery company.

In the delivery assistance device according to the first aspect of the present invention, the transmission unit may transmit a scheduled time of arrival when the vehicle is scheduled to arrive at the position designated by the user to the external device when the vehicle is moving and the vehicle is approaching the position designated by the user.

According to the first aspect of the present invention, the delivery assistance device can cause the delivery company to ascertain the scheduled time of arrival when the vehicle is scheduled to arrive at the position designated by the user in a situation in which the vehicle is moving while approaching the designated position. Therefore, the delivery company can change, for example, the order of delivery according to the scheduled arrival time of the vehicle. Therefore, the delivery assistance device can achieve improvement of efficiency of delivery work at the delivery company.

In the delivery assistance device according to the first aspect of the present invention, the transmission unit may transmit information to the external device when the vehicle is moving and the vehicle is away from the position designated by the user, the information relating to whether or not the vehicle is at a place at which the vehicle is able to return to the position designated by the user within a designated delivery time period of the luggage to the external device when the vehicle is moving and the vehicle is away from the position designated by the user.

According to the first aspect of the present invention, the delivery assistance device can cause the delivery company to ascertain whether or not the vehicle is at a place at which the vehicle can return to the designated position in the designated delivery time period in a situation in which the vehicle is moving away from the designated position. Therefore, for example, when the vehicle moves to a place from which the vehicle cannot come back in the designated delivery time period, the delivery company can exclude the vehicle as the delivery destination and perform a determination as to, for example, whether or not re-delivery is performed. Therefore, the delivery assistance device can achieve improvement of efficiency of delivery work at the delivery company.

In the delivery assistance device according to the first aspect of the present invention, the transmission unit may transmit information on whether or not the vehicle is within a delivery available area in the delivery service to the external device when the vehicle is moving.

According to the first aspect of the present invention, the delivery assistance device can cause the delivery company to ascertain whether or not the vehicle is within the delivery available area in a situation in which the vehicle is moving. Therefore, for example, when the vehicle is out of the delivery available area, the delivery company can exclude the vehicle as the delivery destination and perform a determination as to, for example, whether or not re-delivery is performed. Therefore, the delivery assistance device can achieve improvement of efficiency of delivery work at the delivery company.

A second aspect of the present invention relates to a delivery assistance device that assists in a delivery service in which an inside of a vehicle, a building, or a facility used by a user is designated as a delivery destination of luggage. The delivery assistance device includes a decision unit and an assistance unit. The decision is configured to decide at least one of (i) a provision aspect including at least one of (a) whether or not information on the vehicle, the building, or the facility is provided to a company operating the delivery service and (b) a degree of limitation on the information to be provided and (ii) a contact aspect including at least one of (a) whether or not contact between the company and the user is available and (b) contact method between the company and the user, based on a progress situation for the luggage in a process of the delivery service. The assistance unit is configured to perform at least one of (i) providing information on the vehicle, the building, or the facility to the company according to the provision aspect decided by the decision unit and (ii) mediating contact between the company and the user according to the contact aspect decided by the decision unit.

According to the second aspect of the present invention, the delivery assistance device can determine, for example, whether or not the provision of the information on the vehicle or the like or the contact with the user who is a requester is needed based on the process progress situation for luggage. For example, there may be a situation in which a luggage delivery request has been made, but the luggage has not been brought to the business office or the luggage has not been collected at the business office. Therefore, in the situation as described above, the delivery assistance device can determine that the information on the vehicle or the like or the contact with the user is not needed for the delivery company, based on the progress situation for the luggage in the process of the delivery service. Therefore, the delivery assistance device can make the provision aspect of information on the vehicle or the like different or make the contact aspect between the delivery company and the user different according to whether or not the information on the vehicle or the like or the contact with the user is needed for the delivery company. Accordingly, the delivery assistance device can provide the needed information on the vehicle or the like to the delivery company or mediate the contact as needed with the user, and the delivery assistance device can suppress a situation in which the information on the vehicle or the like is provided to the delivery company without any limitation or the delivery company contacts with the user using general-purpose means (for example, a telephone line) when the information on the vehicle is not needed. Therefore, the delivery assistance device can cause a delivery service in which the inside of the vehicle used by the user can be designated as the delivery destination of the luggage to be established while taking the privacy of the user into consideration.

In the delivery assistance device according to the second aspect of the present invention, the decision unit may decide at least one of providing the information on the vehicle, the building, or the facility to the company by the assistance unit and allowing the contact between the company and the user by the assistance unit, during a period from a collection time when the luggage is collected at a business office to a delivery time when the luggage is delivered.

According to the second aspect of the present invention, the delivery assistance device can specifically provide information on the vehicle or the like to the delivery company or enable the contact between the delivery company and the user solely at a timing at which the information on the vehicle or the like or contact with the user is needed for the delivery company, that is, a period from a collection time when the luggage is collected at a business office to a delivery time when the luggage is delivered. Therefore, the delivery assistance device can specifically cause a delivery service in which the inside of the vehicle or the like used by the user can be designated as a delivery destination of the luggage to be established while taking the privacy of the user into consideration.

In the delivery assistance device according to the second aspect of the present invention, a function of the assistance unit mediating the contact between the company and the user may be provided to be dedicated to the delivery service.

According to the second aspect of the present invention, the delivery assistance device can mediate the contact between the delivery company and the user without disclosing privacy-related information such as a telephone number, an e-mail address, or an account of general-purpose social networking service (SNS) of the user to the delivery company. Accordingly, the delivery assistance device can mediate the contact between the delivery company and the user while further taking the privacy of the user into consideration.

In the delivery assistance device according to the second aspect of the present invention, the assistance unit may mediate the contact between the company and the user using an application program provided to be dedicated to the delivery service, the application program being installed in each of a company terminal belonging to the company and a user terminal belonging to the user.

According to the second aspect of the present invention, the delivery assistance device can mediate the contact between the delivery company and the user, for example, through a messaging function in the dedicated application using a dedicated application installed in the terminals of both of the delivery company and the user. Accordingly, the delivery assistance device can specifically mediate the contact between the delivery company and the user while further taking the privacy of the user into consideration.

In the delivery assistance device according to the second aspect of the present invention, the assistance unit may provide an account of the user of a social networking service provided to be dedicated to the delivery service to the company or links the account of the user to an account of the company to mediate contact between the company and the user.

According to the second aspect of the present invention, the delivery assistance device can mediate the contact between the delivery company and the user without disclosing privacy-related information of the user such as an account of a general-purpose SNS of the user to the delivery company through the SNS provided to be dedicated to the delivery service. Accordingly, the delivery assistance device can specifically mediate the contact between the delivery company and the user while further taking the privacy of the user into consideration.

In the delivery assistance device according to the second aspect of the present invention, the decision unit may decide to prohibit the company to contact the user and decides to allow the user to contact the company, after the luggage has been delivered.

According to the second aspect of the present invention, since the delivery assistance device prohibits the contact from the delivery company to the user after the delivery is completed, it is possible to protect the privacy of the user. On the other hand, since the delivery assistance device permits the contact from the user to the delivery company even after the delivery is completed, the delivery assistance device can cause the user to easily perform contact with the delivery company using the contact function, for example, when the user desires to perform an inquiry about a delivery object. Therefore, the delivery assistance device can improve convenience for the user while taking the privacy of the user into the consideration.

A third aspect of the present invention relates to a delivery assistance method that is executed by a delivery assistance device that assists in a delivery service in which an inside of a vehicle, a building, or a facility used by a user is designated as a delivery destination of luggage. The delivery assistance method includes deciding at least one of (i) a provision aspect including at least one of (a) whether or not information on the vehicle, the building, or the facility is provided to a company operating the delivery service and (b) a degree of limitation on the information to be provided and (ii) a contact aspect including at least one of (a) whether or not contact between the company and the user is available and (b) contact method between the company and the user, based on a progress situation for the luggage in a process of the delivery service; and performing at least one of (i) providing information on the vehicle, the building, or the facility to the company according to the provision aspect decided in the deciding and (ii) mediating contact between the company and the user according to the contact aspect decided in the deciding.

A fourth aspect of the present invention relates to a non-transitory computer-readable storage medium storing a delivery assistance program. The delivery assistance program causes a delivery assistance device to execute the delivery assistance method according to the third aspect of the present invention.

A fifth aspect of the present invention relates to a delivery assistance method that is executed by a delivery assistance device that assists in a delivery service in which a cabin of a vehicle used by a user is designated as a delivery destination of luggage. The delivery assistance method includes deciding at least one of (i) a provision aspect including at least one of (a) whether or not information on the vehicle is provided to a company operating the delivery service and (b) a degree of limitation on the information to be provided and (ii) a contact aspect including at least one of (a) whether or not contact between the company and the user is available and (b) contact method between the company and the user, based on at least one of position information of the vehicle and a progress situation for the luggage in a process of the delivery service; and performing at least one of (i) providing information on the vehicle to the company according to the provision aspect decided in the deciding and (ii) mediating contact between the company and the user according to the contact aspect decided in the deciding.

A sixth aspect of the present invention relates to a non-transitory computer-readable storage medium storing a delivery assistance program. The delivery assistance program causes a delivery assistance device to execute the delivery assistance method according to the fifth aspect of the present invention.

According to the aspects of the present invention, it is possible to provide a delivery assistance device or the like capable of causing a delivery service in which the inside of a vehicle or the like used by a user can be designated as a delivery destination of luggage to be established while taking privacy of the user into consideration.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating an example of an overall configuration of an authentication key management system;
FIG. 2 is a diagram mainly illustrating an example of a configuration regarding locking and unlocking of a vehicle in the authentication key management system;
FIG. 3 is a diagram mainly illustrating an example of a configuration regarding a key sharing service in the authentication key management system;
FIG. 4 is a diagram mainly illustrating an example of a configuration regarding a vehicle cabin delivery service in the authentication key management system;
FIG. 5 is a diagram mainly illustrating an example of a configuration regarding a consumer to consumer (C2C) car sharing service in the authentication key management system;
FIG. 6 is a diagram mainly illustrating an example of a configuration regarding a business to consumer (B2C) car sharing service in the authentication key management system;
FIG. 7 is a flowchart schematically illustrating an example of a vehicle-related information provision process of a center server;
FIG. 8 is a flowchart schematically illustrating another example of the vehicle-related information provision process of the center server;
FIG. 9 is a flowchart schematically illustrating an example of a contact mediation process of the center server; and
FIG. 10 is a flowchart schematically illustrating another example of the contact mediation process of the center server.

### DETAILED DESCRIPTION OF EMBODIMENTS

Hereinafter, modes for carrying out the invention will be described with reference to the drawings.

### Overall Configuration of Key Information Management System

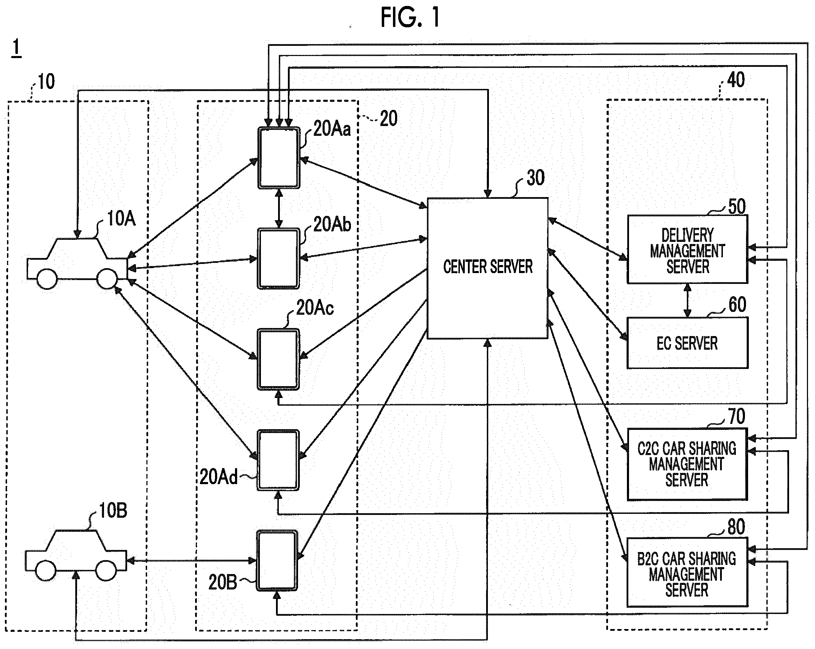

FIG. 1 is a block diagram illustrating an example of an overall configuration of a key information management system according to an embodiment.

An authentication key management system 1 includes a vehicle 10, a mobile terminal 20, a center server 30, and a service management server 40.

The vehicle 10 can perform wireless communication (hereinafter referred to as "near field communication") with the mobile terminal 20 at a relatively short distance (a distance that allows communication between the inside of a vehicle cabin and the outside of the vehicle cabin) according to a predetermined communication standard. The vehicle 10 is a target on which locking and unlocking of doors and activation (ignition on) of the vehicle 10 are performed based on transmission signals (an authentication request, a locking request, and an unlocking request to be described below) from the mobile terminal 20. The door of the vehicle 10 may include not only a door for getting on and off, but also a door for luggage (for example, a trunk lid or a back door) for accessing a trunk (a luggage room). The ignition on (IG-ON) of the vehicle 10 may include ON of a power supply to an electric motor in the vehicle 10 using the electric motor as a main power source, in addition to startup of an engine in the vehicle 10 using the engine as a main power source. Hereinafter, in the embodiment, description will be given on the premise that the vehicle 10 includes an engine 117 to be described below as a main power source, the activation (IG-ON) of the vehicle 10 corresponds to startup of the engine 117, and stopping (IG-OFF) of the vehicle 10 corresponds to stopping of the engine 117.

The vehicle 10 is communicably connected to the center server 30 over a predetermined communication network (for example, a mobile phone network or an Internet network in which a plurality of base stations is terminations). The vehicle 10 transmits position information to the center server 30, as described below.

The vehicle 10 includes a vehicle 10A owned by an individual and a vehicle 10B owned by a company providing a business to consumer (hereinafter referred to as "B2C") car sharing service.

The mobile terminal 20 is communicably connected to the center server 30 over a predetermined communication network (for example, a mobile phone network or an Internet network in which a plurality of base stations is terminations). The mobile terminal 20 can unlock or lock the vehicle 10 by acquiring authentication key information (an example of key information. The authentication key information is hereinafter referred to as "authentication key") distributed from the center server 30 and transmitting the acquired authentication key to the vehicle 10 through relatively short distance wireless communication according to a predetermined manipulation of the user. The mobile terminal 20 may be, for example, a general-purpose mobile phone, a smartphone, or a tablet terminal. As will be described below, a predetermined application program (hereinafter referred to as a "key application") installed in the built-in processing device 23 is activated, and thereby, the above-described function may be realized. The mobile terminal 20 may be a dedicated mobile terminal specialized for unlocking of the doors of the vehicle 10 and activation of the vehicle 10 by acquiring the authentication key from the center server 30 and using the acquired authentication key. The mobile terminal 20 includes mobile terminals 20Aa to 20Ad corresponding to the vehicle 10A (i.g., the mobile terminals 20Aa to 20Ad belonging to the vehicle 10A) and a mobile terminal 20B corresponding to the vehicle 10B (i.g., The mobile terminal 20B belong to the vehicle 10B).

The mobile terminal 20Aa is a mobile terminal carried by an owner (hereinafter referred to as an "owner user") among regular users of the vehicle 10A (hereinafter referred to as "regular users"). The mobile terminal 20Aa may bidirectionally communicate with the mobile terminal 20Ab through wireless communication at a relatively short distance.

The mobile terminal 20Ab is a mobile terminal carried by a regular user other than the owner user of the vehicle 10A (for example, including a family member of the owner user and a close friend of the owner user. The regular user is hereinafter referred to as a "sub-user").

The sub-user may include a user who does not drive the vehicle 10A or a user who cannot drive (for example, an owner user's child under 18 years of age). This is because, for example, when solely a vehicle cabin delivery service to be described below is used, the regular user does not need to drive the vehicle 10A.

The mobile terminal 20Ac is carried by a deliverer of a company that provides a vehicle cabin delivery service to be described below (hereinafter simply referred to as a "delivery company"). The mobile terminal 20Ac is communicably connected to the center server 30 and a delivery management server 50 to be described below over a predetermined communication network (for example, a mobile phone network or an Internet network in which a plurality of base stations is terminations).

The mobile terminal 20Ad is a mobile terminal carried by a borrower of the vehicle 10A in a consumer to consumer (hereinafter referred to as "C2C") car sharing service to be described below. The mobile terminal 20Ad is communicably connected to the center server 30 and a C2C car sharing management server 70 to be described below over the predetermined communication network (for example, a mobile phone network or an Internet network in which a plurality of base stations is terminations).

The mobile terminal 20B is a mobile terminal carried by the borrower of the vehicle 10B in a B2C car sharing service to be described below. The mobile terminal 20B is communicably connected to the center server 30 and a B2C car sharing management server 80 to be described below over the predetermined communication network (for example, a mobile phone network or an Internet network in which a plurality of base stations is terminations).

The center server 30 is communicably connected to the vehicle 10, the mobile terminal 20, and the service management server 40.

The center server 30 manages issuance of an authentication key of the vehicle 10. For example, the center server 30 issues the authentication key according to a predetermined condition and distributes the authentication key to the mobile terminal 20.

The center server 30 acquires position information of the vehicle 10 from the vehicle 10. Accordingly, the center server 30 can ascertain the position of the vehicle 10.

The center server 30 operates the car sharing service for sharing the vehicle 10A among a plurality of regular users including the owner user of the vehicle 10A. Specifically, the center server 30 operates a service for sharing the authentication key of the vehicle 10A that each of a plurality of pre-registered regular users including the owner user can acquire in the mobile terminal 20 of the regular user (the mobile terminals 20Aa, 20Ab) (a key sharing service).

The center server 30 performs a registration process (a use registration process) of allowing the regular user of the vehicle 10A to use a service for using the vehicle 10A (a key sharing service, a vehicle cabin delivery service, a C2C car sharing service, or the like). Specifically, the center server 30 registers an authority to distribute the authentication key to the predetermined mobile terminal 20 (hereinafter referred to as an "authentication key arrangement authority") by a key sharing management unit 3207 or a service management server 40 to be described below transmitting an authentication key arrangement request to be described below in order for the regular user of the vehicle 10A to use the service for using the vehicle 10A.

The center server 30 manages a use situation of the vehicle 10A through a plurality of services (that is, a plurality of companies) through a vehicle cabin delivery service, a C2C car sharing service, and the like to be described below.

The service management server 40 operates and manages various services that are provided using the vehicle 10. The service management server 40 includes a delivery management server 50 and an electronic commerce (EC) server 60 corresponding to the vehicle cabin delivery service, a C2C car sharing management server 70 corresponding to the C2C car sharing service, a B2C car sharing management server 80 corresponding to the B2C car sharing service.

The vehicle cabin delivery service may include a delivery service in which a product ordered at an EC site to be described below is a delivery target, and a delivery service in which a product other than the product ordered at the EC site is a delivery target. For example, the vehicle cabin delivery service in which the product other than the product ordered at the EC site is the delivery target is a service in which the regular user of the vehicle 10A can change a delivery destination to the trunk of the vehicle 10A when there is a notification indicating that luggage destined for a house is scheduled to be delivered, from the delivery management server 50 to the regular user of the vehicle 10A through an e-mail, an account of social networking service (SNS), or a specific application program activated at mobile terminals 20Aa, 20Ab. Hereinafter, in the embodiment, description will be given while focusing on the vehicle cabin delivery service in which the product ordered at the EC site is the delivery target. An operation of each configuration related to the vehicle cabin delivery service to be described below can be appropriately applied to an operation of each configuration in the vehicle cabin delivery service in which the product other than the product ordered at the EC site is the delivery target.

The delivery management server 50 is communicably connected to the mobile terminal 20Ac and the center server 30 over a predetermined communication network, and performs an operation and management of a distribution system related to the vehicle cabin delivery service from reception of the luggage to the delivery of the luggage to the trunk of the vehicle 10A.

A delivery company operating the delivery management server 50 may provide the regular user of the vehicle 10A with a delivery service in which a vehicle cabin other than the trunk of the vehicle 10A can be designated as a delivery destination in place of the trunk of the vehicle 10A or in addition to the trunk of the vehicle 10A. That is, the delivery company may provide the vehicle cabin delivery service in which the vehicle cabin (that is, the inside of the vehicle 10A) including the trunk of the vehicle 10A can be designated as the delivery destination to the regular user of the vehicle 10A. The delivery company operating the delivery management server 50 may provide the regular user of the vehicle 10A with a collection service in which the vehicle cabin including the trunk can be designated as a luggage collection source (hereinafter referred to as "vehicle cabin collection service"), as well as the vehicle cabin delivery service. That is, the delivery management server 50 may perform an operation and management of the vehicle cabin collection service in place of the vehicle cabin delivery service or in addition to the vehicle cabin delivery service. In this case, the luggage that is a luggage collection target may be a product (that is, a product purchased at the EC site) returning to an operating company of the EC site corresponding to the EC server 60 (or a store opened at the EC site) or may be luggage for delivery not related to the EC site. The vehicle cabin collection service may be realized as a collection service when a company (for example, a company for cleaning) that provides a service in a form of temporarily keeping products from a customer keeps luggage from the regular user of the vehicle 10A. In this case, a cleaning company or the like may provide a collection management server that operates and manages the vehicle cabin collection service, which can be included in the service management server 40, as in the delivery management server 50. That is, the collection management server may be provided, in place of the delivery management server 50 or in addition to the delivery management server 50. A recovery service in which the vehicle cabin of the vehicle 10A can be designated as a recovery source of articles that are recovery targets (hereinafter referred to as a "vehicle cabin recovery service") may be provided to the regular user of the vehicle 10A by a company that provides a service in a form of recovering predetermined articles (articles such as waste or a second-hand book desired to be purchased) from customers (for example, a waste collection company or an antique purchase company). In this case, a recovery management server that operates and manages the vehicle cabin recovery service, which may be included in the service management server 40, may be provided by a waste recovery company or the like, similar to the delivery management server 50. That is, the recovery management server may be provided, in place of the delivery management server 50 or in addition to the delivery management server 50.

The EC server 60 is communicably connected to the center server 30 and the delivery management server 50 over a predetermined communication network, and operates a predetermined website (an EC site) for selling products or services. More specifically, the EC server 60 displays the trunk of the vehicle 10A as an option of the delivery destination on an order screen of the EC site, for regular users of the vehicle 10A and a delivery company (a delivery company corresponding to the delivery management server 50) that have been registered in advance. Accordingly, the regular user of the vehicle 10A can have the purchased product delivered to the trunk of the vehicle 10A even when the regular user is absent at a house.

The C2C car sharing management server 70 is communicably connected to the mobile terminal 20Ad and the center server 30, and performs an operation and management of the C2C car sharing service that assists in lending and borrowing of the vehicle 10A between individuals. For example, the C2C car sharing management server 70 performs an operation and management of the C2C car sharing service such as reception of registration of a date and time when the vehicle 10A can be lent by the owner user, reception of reservation of use from a person who wants to borrow the vehicle 10A, and arrangement of the authentication key of the vehicle 10A. The C2C car sharing management server 70 may operate and manage the C2C trunk sharing service in an aspect in which the inside of the vehicle cabin of the vehicle 10A of an individual or the trunk thereof is lent as a temporary luggage storage place, a luggage delivery destination, or the like.

The B2C car sharing management server 80 is communicably connected to the mobile terminal 20B and the center server 30, and performs an operation and management of the B2C car sharing service in which the vehicle 10B owned by a predetermined company (for example, a provider of the B2C car sharing service) is lent in an aspect in which the vehicle 10B can be shared among a plurality of general consumers. For example, the B2C car sharing management server 80 performs an operation and management of the B2C car sharing service such as reception of reservation of use of the vehicle 10B, and arrangement of a parking position of the vehicle 10B and the authentication key of the vehicle 10B. The B2C car sharing management server 80 may operate and manage the B2C trunk sharing service in an aspect in which the inside of the vehicle cabin of the vehicle 10B or the trunk is lent as a temporary luggage storage space or a luggage delivery destination.

A company car use management server that operates a car sharing service (a company car use management service) in which an employee of a company is a borrower, with the vehicle 10 as a company car of the company being a reservation of use target, may be included in the service management server 40, instead of the B2C car sharing management server 80 or in addition to the B2C car sharing management server 80. In this case, when there is an idle time period of the vehicle 10, which is the company car, the C2C car sharing management server 70 may operate the C2C car sharing service, with the vehicle 10 as a company car being a borrowing target. The delivery management server 50 and the EC server 60 may operate the vehicle cabin delivery service in which a delivery destination of luggage to be delivered to a company can be designated as a trunk of the vehicle 10 that is a company car of the company.

### Details of Configuration Regarding Locking, Unlocking, and Activation of Vehicle

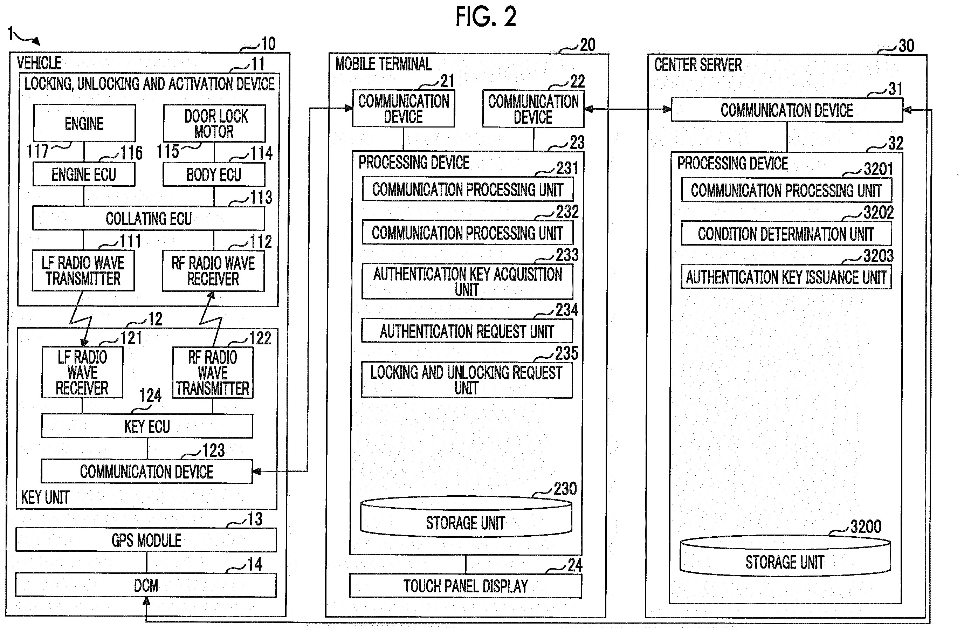

A configuration regarding locking, unlocking, and activation of vehicle 10 in the authentication key management system 1 will be described with reference to FIG. 2.

FIG. 2 is a diagram mainly illustrating an example of the configuration regarding locking, unlocking, and activation of the vehicle 10 in the authentication key management system 1. The vehicle 10 includes a locking, unlocking and activation device 11, a key unit 12, a global positioning system (GPS) module 13, and a data communication module (DCM) 14.

The locking, unlocking and activation device 11 is attached to the vehicle 10 and performs unlocking and locking of the doors of the vehicle 10 according to a locking signal and an unlocking signal to be transmitted as radio waves in a radio frequency (RF) band (for example, 300 MHz to 3 GHz) (hereinafter referred to as "RF radio waves") from the key unit 12. The locking, unlocking and activation device 11 activates the vehicle 10 according to exchange using radio waves in a low frequency (LF) band (for example, 30 Hz to 300 kHz) (hereinafter referred to as "LF radio waves") and RF radio waves with the key unit using a pressing manipulation of an activation switch (not illustrated) provided in the vehicle cabin of the vehicle 10 as a trigger. The locking, unlocking and activation device 11 includes an LF radio wave transmitter 111, an RF radio wave receiver 112, a collating electronic control unit (ECU) 113, a body ECU 114, a door lock motor 115, an engine ECU 116, and an engine 117 as a driving power source of the vehicle 10.

The locking, unlocking and activation device 11 operates with power supplied from an auxiliary battery (not illustrated) mounted on the vehicle 10.

The LF radio wave transmitter 111 is embedded into, for example, a center console or a door handle in the vehicle cabin, and transmits LF radio waves under the control of the collating ECU 113.

The RF radio wave receiver 112 is provided, for example, in a trim of a luggage room of the vehicle 10 and receives RF radio waves under the control of the collating ECU 113.

The collating ECU 113 is an electronic control unit that controls locking and unlocking of the doors of the vehicle 10 and activation of the vehicle 10 based on exchange of signals with the key unit 12. The collating ECU 113 is realized by any hardware, any software, or a combination of any hardware and any software. For example, the collating ECU 113 is configured mainly of a microcomputer includes a central processing unit (CPU), a random access memory (RAM), a read only memory

(ROM), an auxiliary storage device, a real time clock (RTC), and a communication interface. The collating ECU 113 realizes various control processes by executing various programs stored in the ROM or the auxiliary storage device on the CPU. Hereinafter, the same applies to the key ECU 124 to be described below.

The collating ECU 113 receives an unlocking signal and a locking signal transmitted as RF radio waves from the key unit 12 using the RF radio wave receiver 112.

When the collating ECU 113 receives the unlocking signal or the locking signal, the collating ECU 113 performs authentication of a transmission source (the key unit 12) of the unlocking signal or the locking signal based on key information included in the unlocking signal or the locking signal (hereinafter referred to as "internal key information"). For example, when the internal key information registered in an internal memory such as an auxiliary storage device in advance matches the internal key information included in the unlocking signal or the locking signal, the collating ECU 113 determines that the authentication is successful, and when the internal key information registered in the internal memory such as the auxiliary storage device in advance does not match the internal key information included in the unlocking signal or the locking signal, the collating ECU 113 determines that the authentication fails.

For example, the collating ECU 113 may transmit LF radio waves including a "challenge" created in a predetermined method using the internal key information of the internal memory from the LF radio wave transmitter 111 to the key unit 12 and perform challenge response authentication based on a "response" replied from the key unit 12, which is received from the RF radio wave receiver 112.

When the authentication is successful, the collating ECU 113 transmits an unlocking command (upon reception of the unlocking signal) or a locking command (upon reception of the locking signal) to the body ECU 114 via an in-vehicle network such as a controller area network (CAN).

As will be described below, in the unlocking signal, solely some of the doors of the vehicle 10 may be designated as unlocked targets. In this case, the collating ECU 113 designates the door as an unlocked target in the unlocking command. Accordingly, the body ECU 114 can operate solely the door lock motor 115 corresponding to some designated doors and unlock solely some doors.

When the above-described activation switch is pressed, the collating ECU 113 performs authentication of the key unit 12 by exchanging signals with the key unit 12 using the LF radio wave transmitter 111 and the RF radio wave receiver 112.

For example, the collating ECU 113 transmits a request signal in an LF band from the LF radio wave transmitter 111 to the key unit 12 to request reply of the internal key information. When a response signal including the internal key information is received from the key unit 12 by the RF radio wave receiver 112, the collating ECU 113 determines authentication success or authentication failure based on matching between the internal key information registered in the internal memory in advance and the internal key information included in the response signal, as in the case of locking and unlocking the doors.

For example, the collating ECU 113 may perform challenge response authentication, as in the case of locking and unlocking of doors.

When the authentication has succeeded, the collating ECU 113 transmits a startup command of the engine 117 to the engine ECU 116 through the in-vehicle network such as the CAN.

The body ECU 114 is an electronic control unit that performs operation control of the door lock motor 115 that is communicably connected via a one-to-one communication line or the like. The body ECU 114 outputs a control command to cause the door lock motor 115 to perform an unlocking operation according to the unlocking command from the collating ECU 113. The body ECU 114 outputs a control command to cause the door lock motor 115 to perform a locking operation according to the locking command from the collating ECU 113.

The door lock motor 115 is a known electric actuator that unlocks and locks the doors of the vehicle 10 according to the control command from the body ECU 114.

The engine ECU 116 is an electronic control unit that drives and controls the engine 117. Specifically, the engine ECU 116 drives and controls various actuators such as a starter or an injector, which are mounted on the engine 117. When the startup command is input from the collating ECU 113, the engine ECU 116 outputs a control command to various actuators such as a starter or an injector of the engine 117 to start up the engine 117.

The key unit 12 is disposed in the vehicle cabin of the vehicle 10 and transmits the unlocking signal and the locking signal as RF radio waves to the locking, unlocking and activation device 11 according to of the unlocking request and the locking request transmitted from the mobile terminal 20. The key unit 12 performs exchange of signals with the locking, unlocking and activation device 11 according to the signal in the LF band transmitted from the locking, unlocking and activation device 11 when the activation switch provided in the vehicle cabin of the vehicle 10 is pressed. The key unit 12 includes an LF radio wave receiver 121, an RF radio wave transmitter 122, a communication device 123, and a key ECU 124.

The key unit 12 may be disposed at a position (for example, a glove compartment, or the inside of a center console box) at which it is difficult for users seated on respective seats of the vehicle 10 to visually recognize the key unit 12. The key unit 12 may be fixed or may not be fixed to the vehicle 10. The key unit 12 may be operated by a built-in button battery or the like or may be operated by power supplied from an auxiliary battery mounted on the vehicle 10.

The LF radio wave receiver 121 receives the LF radio waves under the control of the key ECU 124.

The RF radio wave transmitter 122 transmits RF radio waves under the control of the key ECU 124.

The communication device 123 is any device that performs near field communication with the mobile terminal 20 under the control of the key ECU 124. The communication device 123 may be, for example, a BLE communication module that performs communication with the mobile terminal 20 in compliance with a Bluetooth (registered trademark) low energy (BLE) communication standard. Hereinafter, description will be given on the premise that a communication standard adopted in the communication device 123 conforms to BLE communication.

The communication device 123 may be a communication device conforming to a short-range communication standard having a very short communicable distance, such as a near field communication (NFC) standard. In this case, the communication device 123 may be built, for example, at a position (for example, the inside of the door handle) close to a body surface of the vehicle 10 outside the vehicle cabin. Accordingly, the key unit 12 (the key ECU 124) can communicate with the mobile terminal 20 outside the vehicle cabin even when the communicable distance of the communication device 123 is very short.

The key ECU 124 is an electronic control unit that performs a control process of transmitting a locking signal and an unlocking signal to the locking, unlocking and activation device 11 according to the unlocking request and the locking request received from the mobile terminal 20.

The key ECU 124 receives an authentication request including an authentication key associated with the key unit 12 from the mobile terminal 20 via the communication device 123.

When the authentication request including the authentication key associated with the key unit 12 is received from the mobile terminal 20, the key ECU 124 performs authentication of the mobile terminal 20 based on the authentication key. When the authentication has been successful, the key ECU 124 restores the internal key information stored in an internal memory such as an auxiliary storage device to a usable state. The internal key information is stored in a state that the internal key information cannot be used for authentication in the locking, unlocking and activation device 11, for example, due to a state in which the internal key information is not accessible or a state in which the internal key information has been encrypted. Therefore, when the authentication of the mobile terminal 20 has been successful, the key ECU 124, for example, performs changing of an authority to access the internal memory for changing the key information to an accessible state, or decodes encrypted internal key information based on the authentication key. Accordingly, the key ECU 124 can access the internal key information which is not normally accessible to transmit an unlocking signal or a locking signal including the internal key information to the locking, unlocking and activation device 11 or transmit an unlocking signal or a locking signal including decoded internal key information to the locking, unlocking and activation device 11. Therefore, the locking, unlocking and activation device 11 can perform appropriate authentication based on the internal key information included in the unlocking signal and the locking signal. Even when a situation in which a malicious third party illegally obtains the key unit 12 occurs, the internal key information in the key unit 12, for example, is not accessible or is encrypted, occurrence of theft of the vehicle 10 can be suppressed.

The key ECU 124 receives the unlocking request and the locking request from the mobile terminal 20 via the communication device 123. When the authentication of the mobile terminal 20 is successful (specifically, a state in which the BLE communication has been established is kept after the authentication of the mobile terminal 20 has been successful) and the key ECU 124 has received the unlocking request or the locking request from the mobile terminal 20, the key ECU 124 transmits the unlocking signal or the locking signal including locking and unlocking key information to the locking, unlocking and activation device 11 via the RF radio wave transmitter 122.

Accordingly, unlocking or locking of the doors of the vehicle 10 is realized after an authentication process in the locking, unlocking and activation device 11.

As described above, the key ECU 124 performs exchange of signals with the locking, unlocking and activation device 11 according to a signal in the LF band transmitted from the locking, unlocking and activation device 11 when the activation switch provided in the vehicle cabin of the vehicle 10 is pressed.

For example, when the request signal is received from the locking, unlocking and activation device 11 by the LF radio wave receiver 121, the key ECU 124 transmits a response signal including the internal key information stored in the internal memory or the like to the locking, unlocking and activation device 11 via the RF radio wave transmitter 122.

For example, when the LF radio waves including the "challenge" are received from the locking, unlocking and activation device 11 by the LF radio wave receiver 121, the key ECU 124 generates a "response" based on the internal key information and transmits the response to the locking, unlocking and activation device 11 via the RF radio wave transmitter 122.

Accordingly, after the authentication process in the locking, unlocking and activation device 11, the startup of the engine 117 is realized.

An authority regarding a function of locking, unlocking, or activating the vehicle 10 imparted by the center server 30 may be defined in the authentication key.

For example, when the authentication key has solely the authority to unlock some of the doors of the vehicle 10, the key ECU 124 transmits an unlocking signal including information for designating the door to be unlocked to the key unit 12 via the RF radio wave transmitter 122. Accordingly, solely some of the doors of the vehicle 10 can be unlocked as described above.

For example, when the authentication key does not have the authority to activate the engine 117, the key ECU 124 may not perform exchange with the locking, unlocking and activation device 11 even when the signal in the LF band from the locking, unlocking and activation device 11 based on a pressing manipulation of the activation switch is received by the LF radio wave receiver 121. Accordingly, it is possible to prohibit the activation of the engine 117 according to the authority of the authentication key.

The GPS module 13 receives GPS signals transmitted from three or more satellites and, desirably, four or more satellites over the vehicle 10, and measures a position of the vehicle 10. The GPS module 13 is communicably connected to the DCM 14 or the like via a one-to-one communication line or an in-vehicle network such as a CAN, and the measured position information of the vehicle 10 is input to the DCM 14 or the like.

The DCM 14 is a communication device that bidirectionally communicates with the center server 30 over a predetermined communication network. The DCM 14 transmits current position information of the vehicle 10 input from the GPS module 13 to the center server 30 at a predefined timing or according to a request from the center server 30, or the like. The DCM 14 transmits, to the center server 30, various types of vehicle information (for example, information indicating that unlocking of the door of the vehicle 10 or activation of the vehicle 10 is performed based on the authentication key) that can be acquired over an in-vehicle network such as a CAN at a predefined timing or according to a request from the center server 30 or the like.

The mobile terminal 20 includes a communication device 21, a communication device 22, a processing device 23, and a touch panel display (hereinafter simply referred to as a "display") 24.

The communication device 21 is any device that performs near field communication with the mobile terminal 20 according to the same communication standard as that of the communication device 123. As described above, in the case of the embodiment, the communication device 21 is, for example, a BLE communication module.

The communication device 22 is any device that communicates with the center server 30, the service management server 40, or the like over a predetermined communication network. The communication device 22 is a mobile communication module corresponding to a communication standard such as Long Term Evolution (LTE), 4th Generation (4G), or 5th Generation (5G).

The processing device 23 performs various control processes in the mobile terminal 20. The functions of the processing device 23 may be realized by any hardware, any software, or a combination of any hardware and any software, and includes, for example, a CPU, a RAM, a ROM, an auxiliary storage device, an RTC, and various interfaces for communication. The processing device 23 includes, for example, a communication processing unit 231, a communication processing unit 232, an authentication key acquisition unit 233, an authentication request unit 234, and a locking and unlocking request unit 235 as functional units that are realized by executing one or more programs stored in the ROM or the auxiliary storage device on the CPU. The processing device 23 includes, for example, a storage unit 230 that is realized as a storage area in the auxiliary storage device, and a process of storing various pieces of data in the storage unit 230 is realized by a predetermined program stored in the ROM or the auxiliary storage device.

The communication processing unit 231 performs bidirectional near field communication with the key unit 12 using the communication device 21 and performs transmission and reception of various signals.

The communication processing unit 232 connects to the predetermined communication network using the communication device 22 and transmits and receives various signals such as a data signal or a control signal to and from the center server 30, the service management server 40, and the like.

The authentication key acquisition unit 233 acquires the authentication key from the center server 30, for example, according to a predetermined manipulation of the user with respect to a predetermined graphical user interface (GUI) displayed on the display 24, and stores the acquired authentication key in the storage unit 230. Hereinafter, the description will be given on the premise that various manipulations with respect to the mobile terminal 20 are performed by a manipulation with respect to the GUI displayed on the display 24 in conjunction with the operation of the key application.

For example, the authentication key acquisition unit 233 of the mobile terminal 20Aa transmits an authentication key acquisition request to the center server 30 via the communication processing unit 232. Accordingly, the center server 30 receives the authentication key acquisition request, and issues the authentication key when the center server 30 determines that the authentication key acquisition request is a regular authentication key acquisition request. The authentication key acquisition unit 233 acquires the authentication key distributed from the center server 30 via the communication processing unit 232.

For example, the authentication key acquisition unit 233 of the mobile terminal 20Ab acquires the authentication key distributed from the center server 30 to the mobile terminal 20Ab via the communication processing unit 232 according to a key sharing request (to be described below) transmitted from the mobile terminal 20Aa to the center server 30.

The authentication key acquisition unit 233 of the mobile terminal 20Ab may transmit the authentication key acquisition request by itself to the center server 30 via the communication processing unit 232. In this case, when the center server 30 receives the authentication key acquisition request from the mobile terminal 20Ab, the center server 30 may perform an inquiry about whether or not to permit distribution of the authentication key to the mobile terminal 20Aa of the owner user.

For example, the authentication key acquisition unit 233 of each of the mobile terminals 20Ac, 20Ad, 20B transmits an authentication key acquisition request to the delivery management server 50, the C2C car sharing management server 70, and the B2C car sharing management server 80 to request acquisition of the authentication key. Accordingly, the delivery management server 50, the C2C car sharing management server 70, and the B2C car sharing management server 80 transmit an authentication key arrangement request to the center server 30 according to reception of the authentication key acquisition request, and the center server 30 issues the authentication key according to reception of the authentication key arrangement request. The authentication key acquisition unit 233 acquires an authentication key that is distributed from the center server 30 via the communication processing unit 232.

The authentication key acquisition unit 233 of the mobile terminals 20Ac, 20Ad, 20B may transmit the authentication key acquisition request to the center server 30 via the communication processing unit 232. In this case, the center server 30 may perform an inquiry of the delivery management server 50, the C2C car sharing management server 70, and the B2C car sharing management server 80 to determine whether or not the authentication key acquisition request is a regular authentication key acquisition request.

The authentication request unit 234 transmits an authentication request to the key unit 12 of the vehicle 10 via the communication processing unit 231 to request authentication of the mobile terminal 20 serving as a remote manipulation unit for locking and unlocking the doors of the vehicle 10. For example, when the authentication request unit 234 finds a key unit corresponding to the authentication key, and specifically, when an advertising packet corresponding to the key unit 12 is received by the communication processing unit 231, the authentication request unit 234 may transmit the authentication request to the key unit 12. For example, the authentication request unit 234 may transmit the authentication request to the key unit 12 according to a predetermined manipulation by the user.

The locking and unlocking request unit 235 transmits an unlocking request including an authentication key or a locking request including the authentication key to the key unit 12 via the communication processing unit 231 according to the predetermined manipulation by the user. Accordingly, even when the unlocking request or the locking request has been transmitted to the key unit 12 before the authentication request is transmitted by the authentication request unit 234, locking and unlocking of the door of the vehicle 10 based on the authentication process in the key unit 12 can be realized. For example, an unlocking button for requesting unlocking of the vehicle 10 and a locking button for requesting locking of the vehicle 10 may be drawn in a GUI serving as a manipulation screen of the display 24, a locking request may be transmitted when the locking button is touched, and an unlocking request may be transmitted when the unlocking button is touched. The locking request and the unlocking request may be transmitted by a manipulation with respect to a predetermined manipulation unit by hardware provided in the mobile terminal 20.

For example, the functions of the authentication key acquisition unit 233, the authentication request unit 234, and the locking and unlocking request unit 235 may be available to the user by a predetermined application program installed in the ROM of the processing device 23, the auxiliary storage device, or the like being activated. Hereinafter, the description will be given on the premise that the functions of the authentication key acquisition unit 233, the authentication request unit 234, and the locking and unlocking request unit 235 of the processing device 23 are available to the user by the key application already installed in the processing device 23 (the auxiliary storage device or the ROM) being activated.

The center server 30 includes a communication device 31 and a processing device 32.

The functions of the center server 30 may be shared and realized by a plurality of servers. Hereinafter, the same applies to the delivery management server 50, the EC server 60, the C2C car sharing management server 70, and the B2C car sharing management server 80.

The communication device 31 is any device that performs bidirectional communication with each of the vehicle 10, the mobile terminal 20, and the service management server 40 over a predetermined communication network.

The processing device 32 performs various control processes in the center server 30. The functions of the processing device 32 may be realized by any hardware, any software, or a combination of any hardware and any software, and the processing device 32 is mainly configured of one or a plurality of server computers including, for example, a CPU, a RAM, a ROM, an auxiliary storage device, an RTC, and a predetermined communication interface. Hereinafter, the same applies to processing devices 52, 62, 72, 82 to be described below of the delivery management server 50, the EC server 60, the C2C car sharing management server 70, and the B2C car sharing management server 80. The processing device 32 includes, for example, a communication processing unit 3201, a condition determination unit 3202, and an authentication key issuance unit 3203 as functional units that are realized by executing one or more programs stored in the ROM or the auxiliary storage device on the CPU. The processing device 32 includes, for example, a storage unit 3200 that is realized as a storage area defined in an auxiliary storage device of a server computer or an external storage device connected to the server computer, and a process in which various pieces of data are stored in the storage unit 3200 is realized by a program stored in the ROM or the auxiliary storage device. Hereinafter, the same applies to the storage units 520, 620, 720, 820 to be described below.

The communication processing unit 3201 controls the communication device 31 to perform exchange of various signals such as control signals and information signals with the vehicle 10, the mobile terminal 20, and the service management server 40.

The condition determination unit 3202 determines whether or not the authentication key acquisition request or the authentication key arrangement request is a regular authentication key acquisition request or a regular authentication key arrangement request according to reception of an authentication key acquisition request from the mobile terminal 20 or an authentication key arrangement request from the service management server 40 received by the communication processing unit 3201.

When the condition determination unit 3202 determines that the authentication key acquisition request or the authentication key arrangement request is the regular one, the authentication key issuance unit 3203 specifies a specification of the authentication key to be issued and issues an authentication key corresponding to the specified specification. For example, the authentication key issuance unit 3203 specifies the vehicle 10 that is a target of locking and unlocking using the authentication key or the key unit 12 corresponding to the vehicle 10. For example, the authentication key issuance unit 3203 specifies the authority of the authentication key regarding a period of time in which the authentication key is valid (available) and the number of times the authentication key is available. For example, the authentication key issuance unit 3203 specifies the authority of the authentication key regarding the unlocking or activation of the vehicle 10, such as lockable and unlockable doors and whether or not the vehicle 10 can be activated. For example, the authentication key issuance unit 3203 specifies the authority of the authentication key regarding the temporary key sharing, such as whether or not the authentication key can be shared with another mobile terminal 20 through a temporary key sharing to be described below, a period of time in which the authentication key can be shared with the other mobile terminal 20, and the number of times the authentication key can be shared with the other mobile terminal 20. Hereinafter, the authority of the authentication key regarding the period of time in which the authentication key is available, the number of times the authentication key is available, and the like, the authority of the authentication key regarding the unlocking or activation of the vehicle 10, and the authority of the authentication key regarding the temporary key sharing are collectively simply referred to as "various authorities of the authentication key". The authentication key issuance unit 3203 distributes the authentication key issued to the mobile terminal 20 that is a target via the communication processing unit 3201.

### Details of Configuration Regarding Key Sharing Service

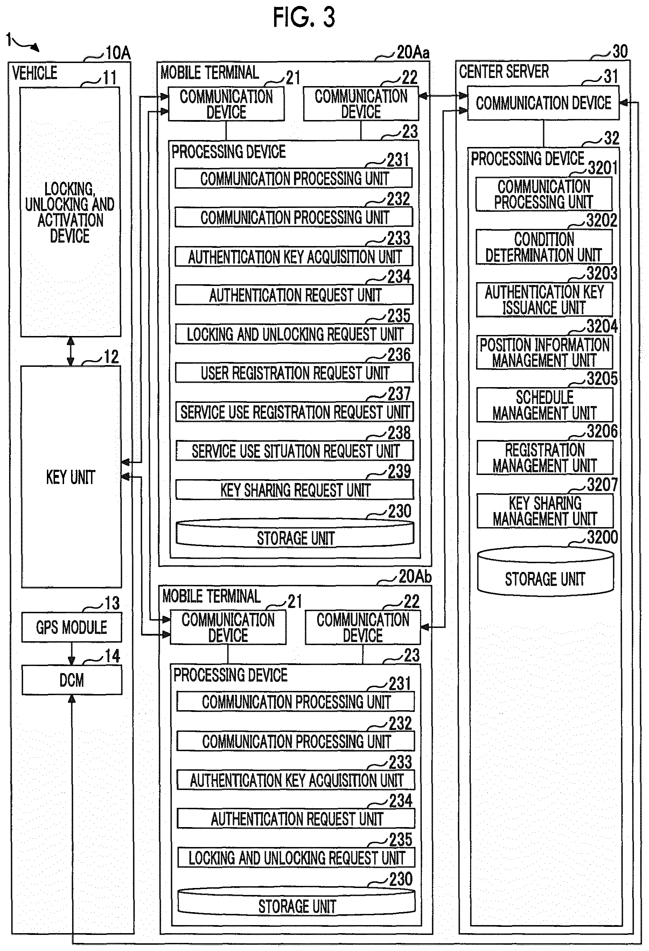

A configuration regarding the key sharing service in the authentication key management system 1 will be described with reference to FIG. 3.

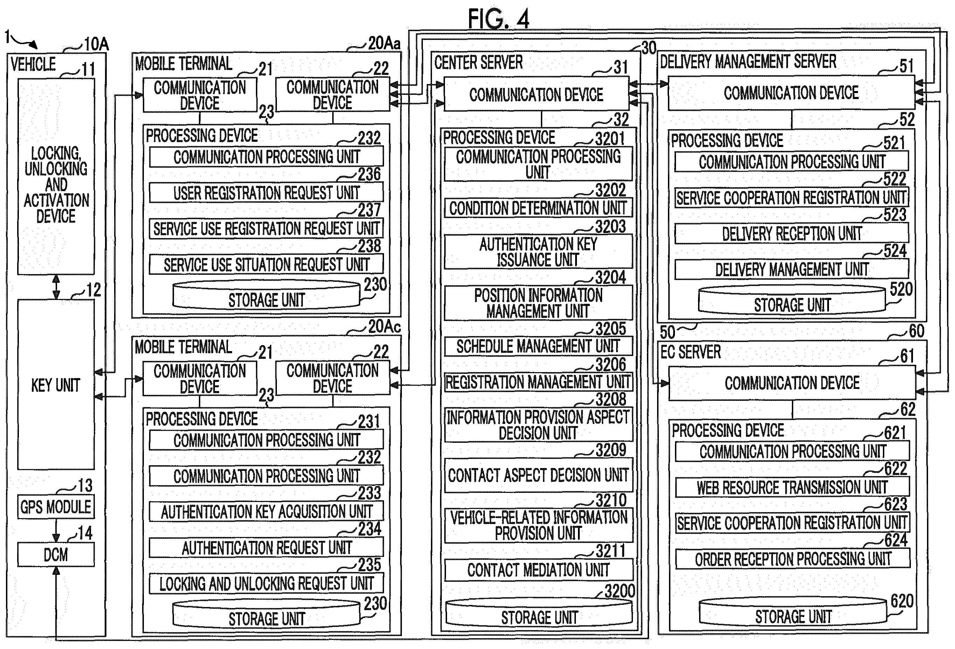

FIG. 3 is a diagram mainly illustrating an example of a configuration regarding the key sharing service in the authentication key management system 1. Hereinafter, a configuration regarding the key sharing service in the authentication key management system 1 will be mainly described with reference to FIG. 3, and duplicate description on the configuration overlapping the configuration regarding locking, unlocking, and activation of the vehicle 10 described above will be omitted as much as possible. Hereinafter, the same applies to description of FIGS. 4 to 6.

The processing device 23 of the mobile terminal 20Aa carried by the owner user of the vehicle 10A includes the communication processing unit 231, the communication processing unit 232, the authentication key acquisition unit 233, the authentication request unit 234, and the locking and unlocking request unit 235, as described above. The processing device 23 of the mobile terminal 20Aa further includes a user registration request unit 236, a service use registration request unit 237, a service use situation request unit 238, and a key sharing request unit 239 as functional units that are realized by executing one or more programs stored in the ROM or the auxiliary storage device on the CPU.

In the embodiment, the description will be given on the premise that the functions of the user registration request unit 236, the service use registration request unit 237, the service use situation request unit 238, and the key sharing request unit 239 of the mobile terminal 20Aa are available to the owner user by the key application being activated and the user authentication based on bidirectional communication with the center server 30 being successful. The description will be given on the premise that the user authentication is performed by the center server 30 based on an identification (ID) defined for the owner user (hereinafter referred to as "owner user ID") in advance and a password corresponding to the owner user ID.

The user registration request unit 236 requests the center server 30 to register the regular user of the vehicle 10A that uses various services (the key sharing service, the vehicle cabin delivery service, the C2C car sharing service, and the like) for using the vehicle 10A, according to a predetermined manipulation by the owner user. For example, the user registration request unit 236 transmits a user registration request including an owner user ID and a password and attribute information (for example, a name, age, and relationship with the owner user) for specifying a sub-user who is a registration target to the center server 30 via the communication processing unit 232.

When a notification indicating that registration of the sub-user has been completed (user registration completion notification) is received from the center server 30 by the communication processing unit 232, the user registration request unit 236 stores an ID (hereinafter referred to as a "sub-user ID") and a password of the sub-user included in the user registration completion notification in the storage unit 230. In this case, the user registration request unit 236 may transmit the sub-user ID and the password to the mobile terminal 20Ab carried by the registered sub-user via the communication processing unit 231 according to a predetermined manipulation by the owner user.

The service use registration request unit 237 requests the center server 30 to perform registration of use of various services for using the vehicle 10A by the regular user of the vehicle 10A according to a predetermined manipulation by the owner user. That is, the service use registration request unit 237 requests registration of the authentication key arrangement authority of the key sharing management unit 3207 or the service management server 40 corresponding to various services for allowing regular users of the vehicle 10A to use various services, as described above. For example, the service use registration request unit 237 transmits a service use registration request including the owner user ID and the password, the information for specifying the vehicle 10A to be used for various services, the information for specifying the service that is a target, and the ID of the regular user who uses the target service (the owner user ID or the sub-user ID) to the center server 30 via the communication processing unit 232. Hereinafter, the owner user ID and the sub-user ID may be collectively referred to as a "regular user ID". Accordingly, the service use registration request unit 237 can register a sub-user who uses the key sharing service in the center server 30.

The service use registration request unit 237 receives a notification that the use registration of the service based on the service use registration request has been completed from at least one of the center server 30 and the service management server 40 through the communication processing unit 232. The service use registration request unit 237 causes the display 24 to display an indication that the use registration of the specific service by the regular user of the vehicle 10A based on the predetermined manipulation by the owner user has been completed. Accordingly, the owner user can ascertain that the use registration of the specific service by the regular user has been completed.

The service use situation request unit 238 requests the center server 30 to provide information on the use situation of various services (service use situation information) including the key sharing service by the regular user of the vehicle 10A for which the use registration has been completed in a form corresponding to the owner user ID according to a predetermined manipulation by the owner user. For example, the service use situation request unit 238 transmits a service use situation request including the owner user ID and the password to the center server 30 via the communication processing unit 232. When the service use situation information received from the center server 30 by the communication processing unit 232 is received, the service use situation request unit 238 displays the service use situation information on the display 24. Accordingly, the owner user can centrally ascertain the information on the use situation of each service by each of the regular users registered for use in the center server 30 in an aspect in which the information is linked to the owner user ID.

The key sharing request unit 239 requests the center server 30 to distribute the authentication key for performing locking, unlocking or activating of the vehicle 10A to the sub-user registered for use in the key sharing service according to a predetermined manipulation by the owner user. For example, the key sharing request unit 239 transmits a key sharing request including an owner user ID and a password, information on the vehicle 10A that is a locking and unlocking target by the authentication key, and information (for example, a sub-user ID) on the sub-user that is a distribution (share) target of the authentication key to the center server 30 via the communication processing unit 232. When the key sharing request unit 239 transmits the key sharing request, use period information (for example, a date and time of use start and a date and time of use end) regarding a period of time in which the authentication key set and distributed by a predetermined manipulation by the owner user is available may be included in the key sharing request. The key sharing request may include authority information on various authorities of the authentication key, such as an authority of the authentication key regarding a period of time in which the authentication key is available or the number of times the authentication key is available, an authority of the authentication key regarding the unlocking or activation of the vehicle, and an authority of the authentication key regarding temporary key sharing to be described below, which can be designated according to the predetermined manipulation by the owner user. Accordingly, as described below, when the authentication key available at the same time is shared among the mobile terminals 20, the owner user can appropriately set authority information such that use of the vehicle 10A by a user other than the owner user can be limited. Therefore, security of the vehicle 10A can be improved.

The key sharing request unit 239 may set the mobile terminals 20 (that is, at least one of the mobile terminals 20Aa, 20Ab) of a plurality of regular users of the vehicle 10A as distribution targets and request the center server 30 to distribute the authentication key of which the periods of time in which the authentication key is available overlap according to the predetermined manipulation by the owner user. That is, in the key sharing request, the regular users that are authentication key distribution targets may be designated, or the owner users may be included among the regular users. In the key sharing request, the period of time in which the authentication key is available for each of the designated regular users may overlap. Accordingly, the authentication key of the vehicle 10A available at the same time can be shared by the regular users. Therefore, for example, when a plurality of persons gets on the vehicle 10A together and go out for travel, camp, or the like, each of passengers can lock and unlock the vehicle 10A without lending and borrowing the mobile terminal 20 in which the authentication key has been stored, and therefore, convenience for users can be improved.

Even when the key sharing request unit 239 may share the distributed authentication key with another mobile terminal 20 (that is, the mobile terminal 20 in which the key application is installed) according to a predetermined manipulation by the owner user (hereinafter, a sharing aspect of the authentication key will be referred to as "temporary key sharing"). In this case, the other mobile terminal 20 may be the mobile terminal 20Ab of the sub-user or may be the mobile terminal 20 of a user other than the sub-user, that is, a user temporarily using the vehicle 10A.

For example, the key sharing request unit 239 transmits the authentication key (more specifically, a copy of the authentication key) to another mobile terminal 20 via the communication processing unit 231. Accordingly, the owner user of the vehicle 10A can share the authentication key with the other user even when a plurality of persons suddenly get on the vehicle 10A together and go out for traveling or the like. It is possible to share the authentication key available at the same time with the other mobile terminal 20 directly from the mobile terminal 20Aa. Accordingly, for example, even when the mobile terminal 20Aa is at a place at which a communication situation in a wireless mobile communication network is poor or out of a communication range, the owner user of the vehicle 10A can share the authentication key with the other user.

In this case, the key sharing request unit 239 may transmit the authentication key of which the authority regarding the period of time in which the authentication key is available or the number of times the authentication key is available or the authority regarding the unlocking or activation of the vehicle 10A, which is set based on the predetermined manipulation by the owner user or which is defined in advance, has been restricted, to the other mobile terminal 20 via the communication processing unit 231. Specifically, for example, an authentication key with an authority to limit the period of time in which the authentication key is available or the number of times the authentication key is available to, for example, 30 minutes or once, or an authentication key with an authority, for example, solely to lock and unlock doors for getting on and off the vehicle 10A or prohibit activation of the vehicle 10A may be transmitted to another mobile terminal 20. Hereinafter, the same applies to the case of temporary key sharing that is performed via the center server 30. Accordingly, security of the vehicle 10A due to the temporary key sharing can be improved.

When the temporary key sharing is performed, the key sharing request unit 239 may cause the authentication key to be distributed from the center server 30 to the other mobile terminal 20, as in the case of a normal key sharing. In this case, the key sharing request unit 239 may transmit a temporary key sharing request including information (for example, an issued ID embedded in the authentication key) for specifying the distributed authentication key and information for designating the other mobile terminal 20 that is a distribution target to the center server 30 via the communication processing unit 232, to cause the authentication key of the vehicle 10A to be distributed from the center server 30 to the other mobile terminal 20.

For example, when the other mobile terminal 20 is the mobile terminal 20Ab of the sub-user, the key sharing request unit 239 may transmit a temporary key sharing request including the sub-user ID to the center server 30 via the communication processing unit 232.

For example, the key sharing request unit 239 acquires predetermined identification information (for example, a quick response (QR) code (registered trademark) corresponding to the user of another mobile terminal 20 registered as a user installing the key application in the center server 30) from the other mobile terminal 20 via the communication processing unit 231. The key sharing request unit 239 may transmit a temporary key sharing request for designating another mobile terminal 20 specified based on the identification information as a distribution target, to the center server 30.

The mobile terminal 20Aa may acquire the identification information using another method. For example, the mobile terminal 20Aa may acquire identification information corresponding to the user of the other mobile terminal 20 in an aspect in which the identification information displayed on the display 24 of the other mobile terminal 20 is recognized using a mounted camera function. For example, the mobile terminal 20Aa may acquire the identification information transmitted from the user of the other mobile terminal 20 to a mail address or an account of an SNS of the owner user.

For example, according to a predetermined manipulation by the owner user, the key sharing request unit 239 transmits a candidate terminal information request for requesting a candidate terminal information on a candidate terminal that is a candidate for the other mobile terminal 20 present around a current position of the mobile terminal 20Aa to the center server 30 via the communication processing unit 232. When the candidate terminal information is received from the center server 30 by the communication processing unit 232, the key sharing request unit 239 causes the display 24 to display the candidate terminal information. When the candidate terminal information is displayed on the display 24, information for specifying a candidate terminal in which a specific manipulation or operation is performed among candidate terminals may be included in the candidate terminal information replied from the center server 30. Accordingly, the owner user of the vehicle 10A can specify another mobile terminal 20 from among the candidate terminals displayed on the display 24 of the mobile terminal 20Aa by the user of the other mobile terminal 20 as a key sharing target performing a specific manipulation or operation with respect to the mobile terminal 20. The key sharing request unit 239 may transmit a temporary key sharing request for designating the other mobile terminal 20 specified from among the candidate terminals as a distribution target to the center server 30, according to a predetermined manipulation by the owner user.

The key sharing request unit 239 may activate the key application according to a predetermined manipulation by the owner user to transmit link information according to a uniform resource locator (URL) scheme for allowing the other mobile terminal 20 to acquire the authentication key from the center server 30 (hereinafter, simply referred to as "link information") to a mail address or an account of an SNS of the user of the other mobile terminal 20 via the communication processing unit 232. In this case, the key sharing request unit 239 transmits a temporary key sharing request for designating the acquired authentication key to the center server 30 via the communication processing unit 232 according to a predetermined manipulation by the owner user, and acquires the link information replied from the center server 30 according to the temporary key sharing request. Accordingly, the key sharing request unit 239 can cause the authentication key to be distributed from the center server 30 to the other mobile terminal 20.

The temporary key sharing may be executed from the mobile terminal 20Ab of the sub-user to which the authentication key has already been distributed. That is, a function regarding the temporary key sharing in the key sharing request unit 239 may be included in a function of the key application that is installed in the processing device 23 of the mobile terminal 20Ab of the sub-user. Accordingly, it is not needed to lend and borrow the mobile terminal 20Ab of the sub-user who has acquired the authentication key even when a plurality of persons including no owner user get on the vehicle 10A together, and convenience for the sub-user of the vehicle 10A can be further improved. Hereinafter, description will be given on the premise that the temporary key sharing can be performed from the mobile terminal 20Ab of the sub-user.

The processing device 32 of the center server 30 includes the communication processing unit 3201, the condition determination unit 3202, the authentication key issuance unit 3203, and the storage unit 3200, as described above. The processing device 32 of the center server 30 includes, for example, a position information management unit 3204, a schedule management unit 3205, a registration management unit 3206, and a key sharing management unit 3207 as functional units realized by executing one or more programs stored in an auxiliary storage device or the like of a server computer on a CPU.

When the authentication key acquisition request has been received from the mobile terminals 20Aa, 20Ab by the communication processing unit 3201, the condition determination unit 3202 performs authentication based on the regular user ID and the password included in the authentication key acquisition request. For example, the condition determination unit 3202 collates the regular user ID and password registered in the storage unit 3200 with the regular user ID and password included in the authentication key acquisition request, and determines that the authentication is successful, that is, the authentication key acquisition request is a regular authentication key acquisition request when both match.

The condition determination unit 3202 determines whether or not the authentication key arrangement request sent from the key sharing management unit 3207 to be described below is a regular authentication key arrangement request. For example, when the authentication is successful based on authentication information (for example, the ID and the password) included in the authentication key arrangement request from the key sharing management unit 3207, the condition determination unit 3202 may determine that the authentication key arrangement request is a regular authentication key arrangement request.

When the condition determination unit 3202 determines that the authentication key acquisition request or the authentication key arrangement request is a regular authentication key acquisition request or a regular authentication key arrangement request, the authentication key issuance unit 3203 issues the authentication key and distributes the authentication key to the mobile terminal 20 via the communication processing unit 3201.

The position information management unit 3204 manages the position information of the vehicles 10 (10A, 10B). Specifically, the position information management unit 3204 transmits a position information request to the vehicle 10 via the communication processing unit 3201. In response to the position information request, the DCM 14 of the vehicle 10 replies the center server 30 with the position information of the vehicle 10 input from the GPS module 13, and the position information management unit 3204 can acquire the position information of the vehicle 10.

The position information management unit 3204 acquires the position information from the vehicle 10A via the communication processing unit 3201 and monitors the position information of the vehicle 10A in real time to ascertain a movement situation of the vehicle 10A. Accordingly, for example, the position information management unit 3204 can notify the owner user of the position information of the vehicle 10A lent to the sub-user via the communication processing unit 3201. For example, the position information management unit 3204 can notify the mobile terminal 20Ab of the sub-user of information such as whether or not the vehicle 10A scheduled to be lent to the sub-user is directed to a designated position (for example, a house) or a reference for returning, via the communication processing unit 3201.

The schedule management unit 3205 manages the use situation of the vehicle 10A regarding various services. For example, the schedule management unit 3205 periodically acquires a use schedule of the vehicle 10 by the key sharing service and, specifically, information on a date and time on which the authentication key distributed by the key sharing service is available, from the key sharing management unit 3207. The schedule management unit 3205 acquires the use schedule of the vehicle 10A by each of the vehicle cabin delivery service and the C2C car sharing service from the delivery management server 50 and the C2C car sharing management server 70 via the communication processing unit 3201. The schedule management unit 3205 generates information on the use schedule of the vehicle 10A (vehicle use schedule information) over a plurality of services based on the acquired use schedule of the vehicle 10A regarding the various services, and updates the vehicle use schedule information stored in the storage unit 3200.

The registration management unit 3206 performs registration of the regular user (the sub-user) who uses various services according to the user registration request received from the mobile terminal 20Aa of the owner user by the communication processing unit 3201. For example, the registration management unit 3206 collates the owner user ID and password included in the user registration request from the mobile terminal 20Aa with the owner user ID and password stored in the storage unit 3200, and determines that the user registration request is a regular user registration request when both match. That is, the registration management unit 3206 determines that the authentication is successful. The registration management unit 3206 registers the sub-user ID included in the regular user registration request in a user service registration information database (DB) in the storage unit 3200 as the regular user who can use various services.

The registration management unit 3206 performs registration of use of various services by the regular user of the vehicle 10A according to the service use registration request received from the mobile terminal 20Aa of the owner user by the communication processing unit 3201. That is, according to the service use registration request, the registration management unit 3206 performs registration of an authentication key arrangement authority of the key sharing management unit 3207 or the service management server 40 corresponding to various services to allow the user of the vehicle 10A to use various services. For example, the registration management unit 3206 performs the same authentication process as described above based on the owner user ID and the password included in the service use registration request from the mobile terminal 20Aa to determine whether the service use registration request is a regular service use registration request. When the service use registration request is a regular service use registration request, the registration management unit 3206 determines whether or not the regular user ID included in the service use registration request has already been registered in the user service registration information DB. When the regular user ID included in the service use registration request has already been registered in the user service registration information DB, the registration management unit 3206 registers the service of a target specified by the service use registration request in the user service registration information DB in the storage unit 3200 as a service available to the regular user corresponding to the regular user ID.

Specifically, the registration management unit 3206 constructs a user service registration information DB in an aspect in which service-specific information for specifying a target service, vehicle-specific information for specifying the vehicle 10A, a regular user ID for specifying a regular user who uses the service, and service link information in which the vehicle-specific information corresponding to the vehicle 10A and the regular user ID are associated with the target service is linked to the owner user ID.

The service-specific information is, for example, a service ID that is defined for each service. Specifically, for example, when there is a plurality of companies providing the C2C car sharing service, a unique service ID is defined for each of the companies. For example, when the same company provides a plurality of C2C car sharing services, a unique ID is defined for each of the services provided by the same company. When a vehicle cabin delivery service is provided by a combination of a plurality of delivery companies and a plurality of EC companies, a unique service ID may be defined for each combination of the delivery company and the EC company, and the target service may be specified by a combination of the unique service ID defined for each of the delivery companies and a unique service ID defined for each of the EC companies.

The vehicle-specific information may be any information as long as the information is able to specify the vehicle 10A that is a target of locking, unlocking, or activation using the authentication key. For example, the vehicle-specific information may be identification information such as a vehicle ID or a vehicle identification number (VIN), which is defined for each vehicle 10A. For example, the vehicle-specific information may be identification information such as a key unit ID, which is defined for each in-vehicle device related to locking, unlocking, or activation of the doors based on the authentication key mounted on the vehicle 10A such as the key unit 12. Hereinafter, description will be given on the premise that the vehicle-specific information is the key unit ID.

The service link information is information needed for the key sharing management unit 3207, the delivery management server 50, the EC server 60, and the C2C car sharing management server 70 managing various services to transmit the authentication key arrangement request to thereby cause the authentication key issuance unit 3203 to issue the authentication key and distribute the authentication key to the mobile terminal 20 that is a target. That is, the authentication key issuance unit 3203 can specify the vehicle 10A that is a target of locking, unlocking, or activation using the authentication key and issue an appropriate authentication key by receiving the authentication key arrangement request including the service link information from the key sharing management unit 3207, the delivery management server 50, the EC server 60, and the C2C car sharing management server 70.

The service link information may be any information as long as the target service is associated with the vehicle 10A and the user who uses the service in the center server 30. For example, the service link information may be a login ID of the regular user at a website for users of various services corresponding to the key sharing management unit 3207, the delivery management server 50, the EC server 60, and the C2C car sharing management server 70 (hereinafter referred to as "service login ID" for convenience). In this case, the service use registration request unit 237 of the mobile terminal 20Aa transmits the service use registration request including the service login ID of the regular user that is a registration target corresponding to the various services to the center server 30 via the communication processing unit 232. When the regular user that is a registration target corresponding to various services does not acquire the service login ID, the processing device 23 of the mobile terminal 20Aa may activate a predetermined browser and acquire the service login ID of a website of various services. Accordingly, when the user (the regular user of the vehicle 10A) logs in to the website at the time of requesting a service that is a target, the delivery management server 50 or the C2C car sharing management server 70 can ascertain the service login ID corresponding to the service link information and easily arrange the authentication key regarding the service provision. Hereinafter, description will be given on the premise that the service link information on the vehicle cabin delivery service and the C2C car sharing service is the service login ID.

In the case of regular users who regularly use a plurality of vehicles 10A, the center server 30 can specify the regular user solely by using the service login ID, but cannot specify the vehicle 10A. Therefore, information for indirectly specifying the vehicle 10A (for example, information obtained by encrypting the vehicle-specific information using a predetermined scheme) in addition to the service login ID may be included in the service link information.

When the registration of use of various services has been completed, registration management unit 3206 notifies the mobile terminals 20Aa, 20Ab corresponding to the regular users (e.g., the mobile terminals 20Aa, 20Ab belong to the regular users) that are registration targets that the registration of use of various services has been completed, via the communication processing unit 3201. When the registration of use of various services has been completed, the registration management unit 3206 transmits a service use registration completion notification including the service link information to the key sharing management unit 3207 or the service management server 40 that performs an operation and management of a service that is a registration target.

A notification that the registration of use of various services for the mobile terminals 20Aa, 20Ab has been completed may be transmitted from the service management server 40 that has received the service use registration completion notification.

When the service use situation request has been received from the mobile terminal 20Aa by the communication processing unit 3201, the registration management unit 3206 generates the service use situation information based on, for example, the vehicle use schedule information managed by the user service registration information DB of the storage unit 520 or the schedule management unit 3205, and distributes the service use situation information to the mobile terminal 20Aa via the communication processing unit 3201.

The key sharing management unit 3207 performs an operation and management of the key sharing service.

For example, according to the key sharing request received from the mobile terminal 20Aa of the owner user by the communication processing unit 3201, the key sharing management unit 3207 performs the arrangement of the authentication key to the mobile terminals 20Aa, 20Ab corresponding to the regular user ID designated by the key sharing request. Specifically, the key sharing management unit 3207 collates the owner user ID and the password included in the key sharing request with the owner user ID and the password stored in the storage unit 3200, and determines that the key sharing request is a regular key sharing request when both match. The key sharing management unit 3207 inquires of the schedule management unit 3205 and determines whether or not there is mismatch, that is, overlapping of the use date and time regarding the use of the services and the vehicle 10A of the regular users between the use period information included in the key sharing request and the latest vehicle use schedule information. When there is no overlapping of the use time, the key sharing management unit 3207 sends, to the authentication key issuance unit 3203, the authentication key arrangement request including information on the regular users corresponding to the mobile terminals 20Aa, 20Ab that are distribution targets of the authentication key specified by the information included in the key sharing request, and the vehicle 10A that is a target of locking, unlocking, or activation using the authentication key, and authority information such as a period of time in which the authentication key is available to the respective mobile terminals 20Aa, 20Ab, the number of times the authentication key is available to the respective mobile terminals 20Aa, 20Ab, unlockable doors, and whether or not the vehicle can be activated. Accordingly, the authentication key issuance unit 3203 can specify the regular user IDs corresponding to the mobile terminals 20Aa, 20Ab that are distribution targets of the authentication key, and the vehicle 10A that is a target of locking, unlocking, or activation using the authentication key, and issue an appropriate authentication key.

For example, the key sharing management unit 3207 confirms, for example, attribute information (for example, an age or presence or absence of a driving license) of the users of the mobile terminals 20Aa, 20Ab that are distribution targets of the authentication key that is designated by the key sharing request, which is stored in the storage unit 3200. When the users of the mobile terminal 20Aa, 20Ab (regular users of the vehicle 10A) that are distribution targets of the authentication key are users determined to be unable to drive the vehicle 10A, the key sharing management unit 3207 allows an authentication key to which an authority to be unable to activate the vehicle 10A has been imparted to be issued to the mobile terminal 20 of the user. The user who cannot drive the vehicle 10A is, for example, a user who has not reached an age at which the user can acquire a driver's license or a user who does not acquire the driver's license. Specifically, the key sharing management unit 3207 sends an authentication key arrangement request in which an indication that the activation of the vehicle 10A is prohibited is included in authority information corresponding to the mobile terminals 20Aa, 20Ab corresponding to the users determined to be unable to drive the vehicle 10A, to the authentication key issuance unit 3203. Accordingly, since the authentication key issuance unit 3203 can distribute the authentication key to which the authority to prohibit the activation of the vehicle 10A has been imparted, to the mobile terminals 20Aa, 20Ab of the users who are unable to drive the vehicle 10A, it is possible to improve safety of the vehicle 10A in the key sharing service.

For example, the key sharing management unit 3207 distributes the authentication key of the vehicle 10A to the other mobile terminal 20 designated by the temporary key sharing request received from the mobile terminal 20Aa of the owner user by the communication processing unit 3201 based on the temporary key sharing request. Specifically, the key sharing management unit 3207 specifies the ID of the installing user corresponding to the other mobile terminal 20 that is a distribution target (hereinafter referred to as "installing user ID") based on the installing user information DB of the key application stored in the storage unit 3200. The key sharing management unit 3207 sends an authentication key arrangement request including the specified installing user ID and information (for example, an issued ID of the authentication key included in the temporary key sharing request) corresponding to the authentication key designated by the temporary key sharing request to the authentication key issuance unit 3203. Accordingly, the authentication key issuance unit 3203 can specify another mobile terminal 20 that is a distribution target based on the installing user ID, the issued ID of the authentication key, and the like, and distribute the authentication key to the other mobile terminal 20 via the communication processing unit 3201.

A function of the key sharing management unit 3207 may be transferred to a server (a key sharing management server) outside the center server 30, which may be included in the service management server 40, similar to other services for using the vehicle 10A.

The mobile terminal 20Ab carried by the sub-user includes the communication processing unit 231, the communication processing unit 232, the authentication key acquisition unit 233, the authentication request unit 234, the locking and unlocking request unit 235, and the storage unit 230, as described above.

In the embodiment, description will be given on the premise that the function of the authentication key acquisition unit 233 of the mobile terminal 20Ab is available to the sub-user by the key application being activated and the user authentication based on bidirectional communication with the center server 30 being successful. Description will be given on the premise that the user authentication is performed by the center server 30 based on the sub-user ID and the password. Description will be given on the premise that functions of the authentication request unit 234 and the locking and unlocking request unit 235 of the mobile terminal 20Ab are available to the sub-user by the key application being activated.

The authentication key acquisition unit 233 acquires the authentication key distributed from the center server 30 according to the key sharing request transmitted from the mobile terminal 20Aa to the center server 30 via the communication processing unit 232, as described above. Accordingly, the mobile terminal 20Ab can lock and unlock the doors of the vehicle 10A or activate the vehicle 10A based on the functions of the communication processing unit 231, the authentication request unit 234, and the locking and unlocking request unit 235. That is, the sub-user carrying the mobile terminal 20Ab can directly use the vehicle 10A through the key sharing service. For example, the sub-user can lock and unlock the vehicle 10A using the mobile terminal 20Ab without performing key exchange with the owner user and drive the vehicle 10A. Similarly, the owner user can lend the vehicle 10A to the sub-user without exchanging the key with the sub-user. Accordingly, it is possible to improve convenience in lending and borrowing of the vehicle 10A between the owner user of the vehicle 10A and the sub-user through the key sharing service in the authentication key management system 1.

The authentication key acquisition unit 233 acquires the authentication key that is distributed from the center server 30 according to the temporary key sharing request transmitted from the mobile terminal 20Aa to the center server 30 via the communication processing unit 232, as described above. The same applies to a case where the authentication key is distributed to another mobile terminal 20 other than the mobile terminal 20Ab of the sub-user according to the temporary key sharing request. Accordingly, the other mobile terminal 20 including the mobile terminal 20Ab can lock and unlock the doors of the vehicle 10A or activate the vehicle 10A based on the functions of the communication processing unit 231, the authentication request unit 234, and the locking and unlocking request unit 235. That is, for example, when a plurality of persons including other regular users gets on the vehicle 10A together and goes out and even when the sub-user carrying the mobile terminal 20Ab does not acquire the authentication key in advance, the sub-user does not have to borrow the mobile terminals 20Aa, 20Ab to which the authentication key has already been distributed, and can directly use the vehicle 10A using the mobile terminal 20Ab, such as locking and unlocking the vehicle 10A or driving the vehicle 10A. Similarly, even when the owner user has not caused the mobile terminal 20Ab of the sub-user to acquire the authentication key, it is not needed for the owner user to lend the mobile terminal 20Aa of the owner user to the sub-user. Accordingly, it is possible to improve convenience of the user when a plurality of persons including the regular user of the vehicle 10A gets on the vehicle 10A together and uses the vehicle 10A through the temporary key sharing in the authentication key management system 1.

### Details of Configuration Regarding Vehicle Cabin Delivery Service

A configuration regarding the vehicle cabin delivery service in the authentication key management system 1 will be described with reference to FIG. 4.

FIG. 4 is a diagram mainly illustrating an example of a configuration regarding a vehicle cabin delivery service in the authentication key management system 1. Hereinafter, the configuration regarding the vehicle cabin delivery service in the authentication key management system 1 will be mainly described with reference to FIG. 4, and duplicate description on the configuration overlapping the above-described configuration regarding the key sharing service will be omitted as much as possible.

The processing device 23 of the mobile terminal 20Aa carried by the owner user of the vehicle 10A includes the communication processing unit 232, the user registration request unit 236, the service use registration request unit 237, and the service use situation request unit 238, as described above.

The user registration request unit 236 requests the center server 30 to register the regular user (a sub-user) of the vehicle 10A who uses various services including the vehicle cabin delivery service according to a predetermined manipulation by the owner user, as described above.

The service use registration request unit 237 requests the center server 30 to perform the registration of use of various services including the vehicle cabin delivery service for each registered regular user (the owner user or the sub-user) according to a predetermined manipulation by the owner user, as described above.

For example, the service use registration request unit 237 transmits, as the service link information, a service use registration request for using the vehicle cabin delivery service including a service login ID of a website for a user who uses the service of the delivery management server 50 (hereinafter referred to as a "delivery site") and a service login ID of the EC site, which corresponds to the regular user of the vehicle 10A that is a registration target, to the center server 30.

The service use situation request unit 238 requests the center server 30 to provide information on a use situation of various services (service use situation information) including the vehicle cabin delivery service of the regular user of the vehicle 10A for which the use registration has been performed, in a form corresponding to the owner user ID according to a predetermined manipulation by the owner user, as described above.

The delivery management server 50 includes a communication device 51 and a processing device 52.

The communication device 51 is any device that performs bidirectional communication with each of the mobile terminal 20, the center server 30, and the EC server 60 over a predetermined communication network.

The processing device 52 includes, for example, a communication processing unit 521, a service cooperation registration unit 522, a delivery reception unit 523, and a delivery management unit 524 as functional units that are realized by executing one or more programs stored in the ROM or the auxiliary storage device on the CPU. The processing device 52 includes a storage unit 520 that is realized as a storage area of an auxiliary storage device or the like of the server computer.

The communication processing unit 521 controls the communication device 51 to perform transmission and reception of various signals such as control signals or information signals to and from each of the mobile terminal 20, the center server 30, and the EC server 60.

The service cooperation registration unit 522 performs information registration for cooperation between the center server 30 regarding the use of the vehicle cabin delivery service of the regular user of the vehicle 10A and the delivery management server 50 according to the service use registration completion notification received from the center server 30 by the communication processing unit 521.

For example, the service cooperation registration unit 522 adds a flag indicating a use target of the vehicle cabin delivery service to the service login ID (service link information) included in the service use registration completion notification in the user management DB that manages the user of the delivery site constructed in the storage unit 520. In addition, the service cooperation registration unit 522 performs registration in an aspect in which a service login ID of a website (that is, the EC site) corresponding to the EC server 60 included in the service use registration completion notification is linked to the service login ID included in the service use registration completion notification in the user management DB of the storage unit 520. Accordingly, when an order reception including a service login ID is received from the EC server 60 by the communication processing unit 521, the delivery management server 50 can specify the corresponding service login ID of the delivery site. The delivery management server 50 transmits the authentication key arrangement request including the specified service login ID to the center server 30 such that it is possible to cause the authentication key to be distributed from the center server 30 to the mobile terminal 20Ac of the deliverer, as described below.

The delivery reception unit 523 receives information (delivery request information) on the luggage delivery request including the service login ID of the EC site corresponding to an orderer of the product at the EC site from the EC server 60 via the communication processing unit 521. The delivery request information received from the EC server 60 includes information on a designated delivery destination (delivery destination information), information on a designated delivery date and time (delivery date and time information), and the like in addition to basic information such as a name, an address, and a telephone number of the orderer that is a delivery destination.

The delivery management unit 524 performs an operation and management of each process from reception to delivery regarding the delivery request received by the delivery reception unit 523.

For example, when the delivery management unit 524 receives a notification that luggage has reached a business office that has jurisdiction over a parking position of the vehicle 10A designated by the delivery destination information of the delivery request, the delivery management unit 524 decides a date and time of departure for delivery of the luggage, a deliverer in charge, and the like according to a designated delivery time period.

The delivery management unit 524 inquires the center server 30 about the position information of the vehicle 10A via the communication processing unit 521 before departure of the luggage (for example, 10 minutes before a departure scheduled time). When the delivery management unit 524 inquires the center server 30 about the position information of the vehicle 10A, a service login ID (that is, service link information) at a delivery site of the regular user of the vehicle 10A that is a user of the vehicle cabin delivery service is included in the inquiry. The same also applies to an inquiry about position information to be described below. The inquiry may include an inquiry about information on the vehicle 10A (for example, vehicle type information, color information, or license plate information of the vehicle 10A allowing the deliverer to recognize the vehicle 10A) other than the position information of the vehicle 10A. The inquiry is referred to as a "vehicle-related information acquisition request". The same applies to the case of inquiry about the position information to be described below. The vehicle-related information acquisition request includes information for specifying the luggage that is a target. The delivery management unit 524 acquires current position information of the vehicle 10A from the center server 30 via the communication processing unit 521 and determines whether or not the delivery can be performed from matching with the parking position of the designated vehicle 10A and a relationship with a jurisdiction area.

When the delivery management unit 524 determines that the delivery can be performed, the delivery management unit 524 transmits a notification that the luggage can be delivered to the trunk of the vehicle 10A (delivery available notification) to the mobile terminal 20Ac of the deliverer via the communication processing unit 521.

When an authentication key acquisition request is received from the mobile terminal 20Ac that has received the delivery available notification by the communication processing unit 521, the delivery management unit 524 determines whether or not the authentication key acquisition request is a regular authentication key acquisition request. Specifically, the delivery management unit 524 may perform the determination by collating information on luggage that is a delivery target (hereinafter referred to as "delivery luggage information" for convenience) such as a deliverer, a destination (for example, a name of a recipient or a corporate name), a type of luggage, a delivery time period, and a delivery place that can be included in the authentication key acquisition request, with various types of information on the luggage registered in the storage unit 520. When the delivery management unit 524 determines that the authentication key acquisition request is a regular authentication key acquisition request, the delivery management unit 524 transmits an authentication key arrangement request to the center server 30 via the communication processing unit 521. When the delivery management unit 524 transmits the authentication key arrangement request to the center server 30, information for specifying the mobile terminal 20Ac of the deliverer may be included in the authentication key arrangement request. The information for specifying the deliverer may be, for example, an authentication ID for obtaining user authentication at the center server 30 in order for the deliverer to use the function of the key application corresponding to the authentication key acquisition unit 233 of the mobile terminal 20Ac or the like (hereinafter referred to as a "deliverer ID" for convenience). Accordingly, the mobile terminal 20Ac of the deliverer can acquire the authentication key from the center server 30.

When the delivery management unit 524 receives an inquiry about the current position of the vehicle 10A from the mobile terminal 20Ac of the deliverer who has left for the delivery from the business office via the communication processing unit 521, the delivery management unit 524 inquires of the center server 30 about the current position information of the vehicle 10A. The delivery management unit 524 acquires the current position information of the vehicle 10A from the center server 30 via the communication processing unit 521 and transmits (transfers) the current position information of the vehicle 10A to the mobile terminal 20Ac of the deliverer. Accordingly, the deliverer who has gone out can compare the current position information of the vehicle 10A with the information on the parking position of the vehicle 10A designated by the delivery destination information and determine whether to deliver the luggage or return to the business office.

When the delivery management unit 524 receives the delivery completion notification received from the mobile terminal 20Ac of the deliverer who has completed the delivery of the luggage via the communication processing unit 521, an operation and management regarding the vehicle cabin delivery service regarding the luggage basically ends. When the operation and management regarding the vehicle cabin delivery service regarding the luggage ends, the delivery management unit 524 may notify the regular user of the vehicle 10A that is a requester (a purchaser of a product at the EC site) through an electronic mail or a predetermined application cooperating with the delivery site installed in the mobile terminals 20Aa, 20Ab that the delivery has been completed.

The DCM 14 of the vehicle 10A may determine that the delivery by the deliverer has been completed when the door (the trunk lid or the like) for access to the trunk of the vehicle 10A is locked after the door is unlocked, and notify the center server 30 that the delivery by the deliverer has been completed, as described above. Accordingly, the center server 30 can transmit a delivery completion notification to the delivery management server 50 when the notification is received. That is, the delivery completion notification may be transmitted from the center server 30 to the delivery management server 50.

When the delivery management unit 524 needs to contact with the user of the vehicle 10A which is a requester of luggage in real time, the delivery management unit 524 transmits a contact mediation request to the center server 30 via the communication processing unit 521. When the delivery management unit 524 transmits the contact mediation request, the contact mediation request includes information for specifying the luggage.

For example, when a request for contact with the user who is a requester of luggage is received from the mobile terminal 20Ac of the deliverer by the communication processing unit 521, the delivery management unit 524 transmits the contact mediation request to the center server 30. Accordingly, for example, the deliverer can contact with the user in relatively real time or directly via the mobile terminal 20Ac, for example, when there is any abnormality in the trunk of the vehicle 10A designated as the delivery destination (for example, the trunk is full and luggage cannot be put into the truck).

For example, the delivery management unit 524 may transmit a contact mediation request to the center server 30 when the vehicle 10A is not at the designated position in a situation in which luggage is taken out from the business office that is a starting point of delivery. Accordingly, for example, a deliverer or a worker at the business office can contact the user in relatively real time or directly via the mobile terminal 20Ac or the like and prompt the user to change the delivery destination, the designated position of the vehicle 10A, or the like.

The contact mediation request may be transmitted from the mobile terminal 20Ad of the deliverer to the center server 30.

The EC server 60 includes a communication device 61 and a processing device 62.

The communication device 61 is any device that performs bidirectional communication with each of the mobile terminal 20, the center server 30, and the delivery management server 50 over a predetermined communication network.

The processing device 62 includes, for example, a communication processing unit 621, a web resource transmission unit 622, a service cooperation registration unit 623, and an order reception processing unit 624 as functional units that are realized by executing one or more programs stored in the ROM or the auxiliary storage device on the CPU. The processing device 62 includes a storage unit 620 that is realized as a storage area of an auxiliary storage device or the like of the server computer.

The communication processing unit 621 controls the communication device 61 to perform transmission and reception of various signals such as control signals or information signals to and from each of the mobile terminal 20, the center server 30, and the delivery management server 50.

The web resource transmission unit 622 transmits resources corresponding to the webpage to be displayed on a browser of any terminal of the user browsing the EC site including the mobile terminals 20Aa, 20Ab based on various types of information as resources of the EC site stored in the storage unit 620 to the browser of the terminal using a predetermined scheme. A top page displayed in the EC site, a webpage corresponding to an individual product handled at the EC site, an order input page for the user to input various types of information at the time of ordering an individual product, and the like are included in the webpage on the EC site. For example, the web resource transmission unit 622 transmits a Hyper Text Markup Language (HTML) document corresponding to a webpage, and information under the HTML document such as an image and a moving image displayed on webpages in parallel.

The service cooperation registration unit 623 performs information registration for cooperation between the center server 30 regarding the use of the vehicle cabin delivery service of the regular user of the vehicle 10A and the EC server 60 according to the service use registration completion notification received from the center server 30 by the communication processing unit 621. For example, the service cooperation registration unit 623 adds a flag indicating a use target of the vehicle cabin delivery service to the service login ID included in the service use registration completion notification in the user management DB that manages the user of the EC site constructed in the storage unit 620. In addition, the service cooperation registration unit 623 performs registration in an aspect in which a service login ID of a website (that is, the delivery site) corresponding to the delivery management server 50 included in the service use registration completion notification is linked to the service login ID included in the service use registration completion notification in the user management DB. Accordingly, for example, when an inquiry about an ordered product including the service login ID of the delivery site is received from the delivery management server 50 by the communication processing unit 621, the EC server 60 can specify the service login ID of the corresponding EC site.

The order reception processing unit 624 receives an order of products from the user based on various manipulation inputs corresponding to the order of the product of the user at the EC site. When the order reception processing unit 624 receives an order and the trunk of the vehicle 10A is selected as a delivery destination on an order input page of the EC site, the order reception processing unit 624 inquires the center server 30 about the car use schedule information via the communication processing unit 621. Accordingly, the order reception processing unit 624 can acquire the latest vehicle use schedule information via the communication processing unit 621. Therefore, for example, when a designated date and time of delivery has already overlapped another schedule, the order reception processing unit 624 can take countermeasures such as requesting to change a delivery date and time.

As described above, the vehicle cabin delivery service in which luggage other than an ordered product at the EC site is a target can also be assumed. In this case, the delivery management server 50 may similarly acquire the latest vehicle use schedule information from the center server 30. Accordingly, the delivery management server 50 can take countermeasures such as requesting to change a delivery date and time when a date and time of delivery of the luggage to the trunk of the vehicle 10A designated by the regular user of the vehicle 10A has already overlapped another schedule.

The processing device 32 of the center server 30 includes the communication processing unit 3201, the condition determination unit 3202, the authentication key issuance unit 3203, the position information management unit 3204, the schedule management unit 3205, the registration management unit 3206, and the storage unit 3200, as described above. The processing device 32 of the center server 30 (an example of the delivery assistance device) includes, for example, an information provision aspect decision unit 3208, a contact aspect decision unit 3209, a vehicle-related information provision unit 3210, and a contact mediation unit 3211 as functional units realized by executing one or more programs stored in the ROM of the server computer or the auxiliary storage device on the CPU.

When the condition determination unit 3202 receives the authentication key arrangement request from the delivery management server 50 via the communication processing unit 3201, the condition determination unit 3202 determines whether or not the authentication key arrangement request is a regular authentication key arrangement request. For example, the condition determination unit 3202 determines whether or not the authentication key arrangement request is the regular authentication key arrangement request based on the service login ID of the delivery site included in the authentication key arrangement request or predetermined authentication information (for example, the ID and the password) corresponding to the delivery management server 50.

When the condition determination unit 3202 determines whether or not the authentication key arrangement request is a regular authentication key arrangement request, the authentication key issuance unit 3203 specifies the vehicle 10A corresponding to the authentication key arrangement request based on the user service registration information DB of the storage unit 3200. The authentication key issuance unit 3203 issues the authentication key in which a time is limited (for example, the vehicle is available solely in units of several minutes to tens of minutes from the distribution), the number of times of use is limited (for example, the number of times of use is solely 1), and an authority is limited so that solely locking and unlocking of the trunk lid can be allowed. Accordingly, it is possible to suppress unauthorized use of the vehicle 10A by the deliverer and to improve security. The authentication key issuance unit 3203 distributes the authentication key to the mobile terminal 20Ac of the deliverer specified by the authentication key arrangement request via the communication processing unit 3201.

For example, any method such as a known mathematical method or a method based on bidirectional communication between the center server 30 and the vehicle 10 may be adopted as a method of limiting a period of time in which the authentication key is available or the number of times the authentication key is used.

The position information management unit 3204, for example, acquires the position information of the vehicle 10A via the communication processing unit 3201 in response to the vehicle-related information request from the vehicle-related information provision unit 3210.

The schedule management unit 3205 replies the EC server 60 with the latest vehicle use schedule information stored in the storage unit 3200 via the communication processing unit 3201 according to the inquiry from the EC server 60 received by the communication processing unit 3201.

The registration management unit 3206 performs registration of the regular user (the sub-user) who uses various services including the vehicle cabin delivery service according to the user registration request received from the mobile terminal 20Aa of the owner user by the communication processing unit 3201, as described above. The registration management unit 3206 performs registration of use of the vehicle cabin delivery service by the regular user of the vehicle 10A according to the service use registration request received from the mobile terminal 20Aa of the owner user by the communication processing unit 3201, as described above. When the registration of use of various services including the vehicle cabin delivery service has been completed, the registration management unit 3206 notifies the mobile terminals 20Aa, 20Ab corresponding to the regular users (e.g., the mobile terminals 20Aa, 20Ab belong to the regular users) that are registration targets that the registration of use of various services including the vehicle cabin delivery service has been completed via the communication processing unit 3201, as described above. When the registration of use of the vehicle cabin delivery service has been completed, the registration management unit 3206 transmits a service use registration completion notification including the service link information to the delivery management server 50 and the EC server 60 that perform an operation and management of a service that is a registration target via the communication processing unit 3201.

The information provision aspect decision unit 3208 (an example of a decision unit) decides an aspect in which the vehicle-related information provision unit 3210 provides information on the vehicle 10A (hereinafter referred to as "vehicle-related information") to the delivery management server 50 to the delivery company. The provision aspect of the vehicle-related information includes at least one of whether or not the information is provided and a degree of limitation of the vehicle-related information to be provided (for example, whether or not the position information of the vehicle is information without limitation corresponding to a latitude and longitude of the vehicle, or whether or not the position information of the vehicle is information with limited content of a city at which the vehicle is present). Specifically, the information provision aspect decision unit 3208 makes a permission/rejection determination based on whether or not providing of the vehicle-related information to the delivery management server 50 is needed for the delivery company.
Accordingly, the center server 30 can provide the vehicle-related information to the delivery company in a needed situation, and can assist in a smooth operation of the vehicle cabin delivery service. The center server 30 can suppress a situation in which the vehicle-related information is needlessly provided to the delivery company without limitation and can take the privacy of the user into consideration.

For example, the information provision aspect decision unit 3208 decides an aspect in which the vehicle-related information is provided to the delivery management server 50 based on the position information of the vehicle 10A.

Specifically, when the vehicle 10A is stopped, the information provision aspect decision unit 3208 may decide that the vehicle-related information is to be provided to the delivery management server 50. On the other hand, when the vehicle 10A is moving, the information provision aspect decision unit 3208 may decide that the vehicle-related information is not provided to the delivery management server 50 (that is, the provision of the vehicle-related information to the delivery management server 50 is prohibited). This is because a place to which the deliverer is to be directed is not settled when the vehicle 10A is moving, the delivery of the luggage to the vehicle 10A cannot be settled as a result, and therefore, a determination can be made that the vehicle-related information of the vehicle 10A is not needed for the delivery company.

In the example, the vehicle-related information is transmitted to the delivery management server 50 solely when the vehicle 10A is stopped. More specifically, the vehicle-related information may be transmitted to the delivery management server 50 solely when the vehicle 10A is parked. Accordingly, since the case of temporary stopping during movement (for example, stopping based on traffic regulation regarding a signal or the like) is excluded as a condition that the vehicle-related information is provided to the delivery management server 50, the center server 30 can further protect the privacy of the user. In this example, although the information provision aspect decision unit 3208 performs decision prohibiting the provision of the vehicle-related information when the vehicle is moving, the information provision aspect decision unit 3208 may perform, for example, decision of providing the vehicle-related information with limited content to the delivery management server 50.

For example, the information provision aspect decision unit 3208 decides the provision aspect of the vehicle-related information to the delivery management server 50 based on the process progress situation for luggage in the vehicle cabin delivery service (that is, which of processes between a luggage request and luggage delivery completion the luggage is in). In this case, the information provision aspect decision unit 3208 may regularly acquire the process progress situation for each luggage regarding the vehicle cabin delivery service via the communication processing unit 3201.

Specifically, the information provision aspect decision unit 3208 may decide that the vehicle-related information is to be provided to the delivery management server 50 when the requested luggage is in a process from collection at the business office to delivery (that is, that provision of the vehicle-related information to the delivery management server 50 is permitted). On the other hand, in other cases (for example, when a requested luggage is not received or the luggage is at a store that is a collection source and is not collected at the business office), the information provision aspect decision unit 3208 may decide that the vehicle-related information is not provided to the delivery management server 50 (that is, provision of the vehicle-related information to the delivery management server 50 is prohibited). This is because it cannot be considered that the delivery company needs the vehicle-related information that is mainly needed, for example, at the time of delivery of the luggage to the vehicle 10A at a point in time before the luggage arrives at the business office.

The vehicle-related information is often needed when the delivery of the luggage to the vehicle 10A is actually performed, as described above. Therefore, the information provision aspect decision unit 3208 may permit provision of the vehicle-related information to the delivery management server 50 at a later timing, for example, in a process after the luggage arrives at the business office that is a starting point of delivery from a collection business office or a process after the deliverer is decided to take out the luggage in order to deliver the luggage at the business office that is a starting point of delivery and, otherwise, prohibit the provision. Hereinafter, the same applies to a case where the contact aspect decision unit 3209 decides the contact aspect between the delivery company and the user as described below. In this example, the information provision aspect decision unit 3208 may perform decision prohibiting the provision of the vehicle-related information when the luggage is outside a range of the predetermined process, but instead, for example, may perform decision providing the vehicle-related information with limited content to the delivery management server 50.

The contact aspect decision unit 3209 (an example of a decision unit) decides a relatively real-time contact aspect between the delivery company and the user by the contact mediation unit 3211. The contact aspect between the delivery company and the user may include at least one of the availability of contact and contact means. Specifically, the contact aspect decision unit 3209 performs decision of the contact aspect based on whether or not the contact between the delivery company and the user is needed for the delivery company. Accordingly, the center server 30 can perform mediation of contact between the delivery company and the user in a needed situation, and can assist in a smooth operation of the vehicle cabin delivery service. The center server 30 can suppress a situation in which contact between the delivery company and the user becomes needlessly possible and can take the privacy of the user into consideration.

For example, the contact aspect decision unit 3209 decides the contact aspect between the delivery company and the user based on the position information of the vehicle 10A.

Specifically, the contact aspect decision unit 3209 may decide the contact aspect between the delivery company and the user based on whether or not the vehicle 10A is at a designated position (for example, a parking lot at a house) designated by the user. More specifically, when the vehicle 10A is not at the designated position, the contact aspect decision unit 3209 may decide that the contact between the delivery company and the user is possible (that is, the contact between the delivery company and the user is permitted). On the other hand, when the vehicle 10A is at the designated position, the contact aspect decision unit 3209 may decide that the contact between the delivery company and the user is not possible (that is, the contact between the delivery company and the user is prohibited). It is because it is considered that the delivery company

(deliverer) may be directed to the designated position and needs not to contact the user when the vehicle 10A is at the designated position, whereas the delivery company needs to contact the user to prompt, for example, change of the delivery destination when the vehicle 10A is not at the designated position.

When the vehicle 10A is at the designated position, the contact aspect decision unit 3209 may decide that the contact between the delivery company and the user is not possible, but may restrict the contact between the company and the user by making contact means different when the vehicle 10A is not at the designated position. For example, an aspect in which contact using sound, a message (text input), or the like is permitted in a dedicated application to be described below or the like when the vehicle 10A is not at the designated position, whereas solely contact using the message is permitted when the vehicle 10A is at the designated position may be adopted. For example, an aspect in which direct contact with the user in a dedicated application to be described below is permitted when the vehicle 10A is at the designated position, whereas contact on the dedicated application is not permitted and contact using solely a method such as a request signal being transmitted from the delivery management server 50 to the center server 30 may be permitted when the vehicle 10A is not at the designated position may be adopted.

For example, the contact aspect decision unit 3209 decides the contact aspect between the delivery company and the user based on the process progress situation for luggage in the vehicle cabin delivery service, similar to the case of providing the vehicle-related information to the delivery management server 50.

Specifically, when the requested luggage is in a process from collection at the business office to delivery, the contact aspect decision unit 3209 may decide that the contact between the delivery company and the user is possible (that is, the contact between the delivery company and the user is permitted), similar to the case of providing the vehicle-related information to the delivery management server 50. On the other hand, in other cases, the contact aspect decision unit 3209 may decide that the contact between the delivery company and the user is not possible (that is, the contact between the delivery company and the user is prohibited). This is because it cannot be considered that the delivery company needs direct real-time contact with the user who is needed mainly at the time of work for delivering the luggage to the vehicle 10A or the like at a point in time before the luggage arrives at the business office.

The contact aspect decision unit 3209 may perform decision of the contact aspect for each of the contact from the delivery company to the user and the contact from the user to the delivery company among the contact between the delivery company and the user. For example, the contact aspect decision unit 3209 may perform decision prohibiting the contact from the delivery company to the user in a period before the luggage is collected at the business office or a period after the delivery of the luggage is completed, and permitting the contact from the user to the delivery company. Accordingly, it is possible to enable direct contact from the user to the delivery company while preventing unneeded contact from the delivery company to the user. Thus, the user can easily perform, for example, contact regarding omission of description at the time of a request or the like or contact regarding an abnormality of the delivered luggage or the like with the delivery company, and it is possible to improve convenience for the user. Although the contact aspect decision unit 3209 disables the contact between the delivery company and the user when the luggage is in a process other than the predetermined process, the contact aspect decision unit 3209 may restrict the contact between the delivery company and the user by making contact means different from that when the luggage is in the predetermined process. For example, an aspect in which contact based on sound, a message (text input), or the like is permitted in the dedicated application to be described below or the like when the luggage is in a predetermined process, whereas solely contact based on a message is permitted when the luggage is in a process other than the predetermined process may be adopted. For example, an aspect in which when the luggage is in the predetermined process, direct contact between the user and the delivery company in the dedicated application to be described below is permitted, whereas when the vehicle 10A is not at the designated position, the contact on the dedicated application is not permitted and the contact is permitted solely using a method such as transmission of a request signal from the delivery management server 50 to the center server 30 may be adopted.

When the vehicle-related information acquisition request is received from the delivery management server 50 by the communication processing unit 3201, the vehicle-related information provision unit 3210 (an example of an assistance unit) transmits the vehicle-related information to the delivery management server 50 via the communication processing unit 3201 according to the provision aspect decided by the information provision aspect decision unit 3208.

The vehicle-related information may include, for example, position information, vehicle type information, color information, and license plate information, and the like of the vehicle 10A. The position information of the vehicle 10A can be acquired by the position information management unit 3204, as described above. The vehicle type information, the color information, the license plate information, and the like can be acquired from, for example, a DB for basic information (a basic information DB) of the vehicle 10A registered in the storage unit 3200 in advance.

Specifically, the vehicle-related information provision unit 3210 transmits the vehicle-related information to the delivery management server 50 via the communication processing unit 3201 when the vehicle-related information acquisition request is received from the delivery management server 50 by the communication processing unit 3201 and provision of the vehicle-related information to the delivery management server 50 is decided by the information provision aspect decision unit 3208.

On the other hand, even when the vehicle-related information acquisition request is received from the delivery management server 50 by the communication processing unit 3201, the vehicle-related information provision unit 3210 transmits a notification (a non-permission notification) indicating that the vehicle-related information cannot be transmitted, to the delivery management server 50 via the communication processing unit 3201 when non-provision of the vehicle-related information to the delivery management server 50 is decided by the information provision aspect decision unit 3208.

The vehicle-related information provision unit 3210 may transmit limited vehicle-related information to the delivery management server 50 via the communication processing unit 3201 using a predetermined scheme when the information provision aspect decision unit 3208 decides that the limited vehicle-related information is provided to the delivery management server 50 instead of deciding the vehicle-related information is not provided to the delivery management server 50 as described above.

The vehicle-related information provision unit 3210 (an example of a transmission unit) may transmit a non-permission notification (hereinafter referred to as a "during-movement notification" for convenience) indicating that the vehicle 10A is moving to the delivery management server 50 via the communication processing unit 3201 when the information provision aspect decision unit 3208 decides that the vehicle-related information is not provided to the delivery management server 50 due to the vehicle 10A being moving as described above. Accordingly, the delivery company can ascertain that the provision of the vehicle-related information cannot be received since the vehicle 10A is moving.

The vehicle-related information provision unit 3210 may transmit a during-movement notification including position information of a place at which the vehicle 10A was last stopped (hereinafter referred to as "last stop position information") to the delivery management server 50 via the communication processing unit 3201. Accordingly, the delivery company can ascertain a place from which the vehicle 10A is moving, which is a starting point.

The vehicle-related information provision unit 3210 may transmit a during-movement notification including information indicating that the vehicle 10A is approaching the designated position (hereinafter referred to as "relative movement information" for convenience) to the delivery management server 50 via the communication processing unit 3201, in place of the last stop position information of the vehicle 10A or in addition to the last stop position information of the vehicle 10A. Accordingly, the delivery company can ascertain whether or not the vehicle 10A approaches the designated position. Therefore, for example, since the vehicle 10A is likely to return to the designated position at a relatively close timing when the vehicle 10A is approaching the designated position, the delivery company can perform a respond such as changing the order of delivery or the like so that the deliverer can arrive at the vehicle 10A at a relatively close timing. That is, the center server 30 can improve work efficiency in the vehicle cabin delivery service of the delivery company.

When the vehicle 10A is approaching the designated position, the vehicle-related information provision unit 3210 may transmit a during-movement notification including information indicating that the vehicle 10A is approaching the designated position and relative movement information including a time at which the vehicle 10A is scheduled to arrive at the designated position (hereinafter referred to as "scheduled arrival time"), to the delivery management server 50 via the communication processing unit 3201. In this case, the vehicle-related information provision unit 3210 can estimate the scheduled arrival time of the vehicle 10A by optionally applying a known method applied to a navigation application or the like installed in a car navigation device, a smartphone, or the like. Accordingly, the delivery company can ascertain a specific scheduled arrival time. Therefore, the center server 30 can further improve work efficiency in the vehicle cabin delivery service of the delivery company.

When the vehicle 10A is moving away from the designated position, the vehicle-related information provision unit 3210 may transmit a during-movement notification including the information indicating that the vehicle 10A is moving away from the designated position, and relative movement information including information on whether or not the vehicle 10A is at a place at which the vehicle 10A can return to the designated position (hereinafter referred to as "designated position returnability information") in the designated delivery time period designated by the user in advance, or the like to the delivery management server 50 via the communication processing unit 3201. In this case, the vehicle-related information provision unit 3210 predicts a needed time from a current position of the vehicle 10A to the designated position by optionally applying a known method applied to the car navigation device or the navigation application, as in the case of the scheduled arrival time, and accordingly, can determine whether or not the current position of the vehicle 10A is a place at which the vehicle can return to the designated position in the designated delivery time period. Accordingly, the delivery company can ascertain whether or not the vehicle 10A is at a place at which the vehicle 10A can return to the designated position in the designated delivery time period. Therefore, for example, the delivery company performs delivery in the designated delivery time period when the vehicle 10A is present at the place at which the vehicle can return to the designated position in the designated delivery time period, and can stop the delivery in the designated delivery time period of this time and perform a response such as re-delivery when the vehicle 10A is not present at the place at which the vehicle can return to the designated position in the designated delivery time period. Therefore, the center server 30 can improve work efficiency in the vehicle cabin delivery service of the delivery company.

The vehicle-related information provision unit 3210 may transmit a during-movement notification including information on whether or not the vehicle is within the delivery available area in the vehicle cabin delivery service (hereinafter referred to as "delivery available area information" for convenience) to the delivery management server 50 via the communication processing unit 3201 in place of the last stop position information of the vehicle 10A, the relative movement information of the vehicle 10A, or the like or in addition to the last stop position information of the vehicle 10A, the relative movement information of the vehicle 10A, or the like. Accordingly, the delivery company can ascertain whether the vehicle 10A is within a delivery available area or outside the delivery available area and can determine whether or not delivery of the luggage to the vehicle 10A is available. Therefore, the center server 30 can improve work efficiency in the vehicle cabin delivery service of the delivery company.

Hereinafter, the last stop position information, the relative movement information, the delivery available area information, and the like are collectively referred to as "additional information" of the moving information.

The vehicle-related information provision unit 3210 may directly transmit the vehicle-related information or the non-permission notification (during-movement notification) to the mobile terminal 20Ac of the deliverer needing the information via the communication processing unit 3201. In this case, the vehicle-related information provision unit 3210 may cause the display 240 of the mobile terminal 20Ac to display the content of the vehicle-related information or the additional information. For example, the vehicle-related information provision unit 3210 may transmit the vehicle-related information or the during-movement notification to the mobile terminal 20Ac in the form of a display request to the display 240 via the communication processing unit 3201. For example, the vehicle-related information provision unit 3210 may cause the display 240 to display the additional information through a predetermined application programming interface (API) incorporated in a key application activated by the mobile terminal 20Ac.

When the contact mediation request is received from the delivery management server 50 by the communication processing unit 3201, the contact mediation unit 3211 (an example of an assistance unit) performs mediation of direct contact between the delivery company (for example, the deliverer) and the user who is a requester of the luggage in a relatively real time according to the provision aspect decided by the contact aspect decision unit 3209.

Specifically, the contact mediation unit 3211 performs mediation of the contact between the delivery company and the user when the contact mediation request is received from the delivery management server 50 by the communication processing unit 3201 and the decision is performed so that the contact aspect decision unit 3209 performs a decision enabling contact between the delivery company and the user.

For example, the contact mediation unit 3211 may mediate contact between the delivery company and the user using, for example, an application program provided to be dedicated to the vehicle cabin delivery service (for example, the above-described key application. Hereinafter referred to as a "dedicated application"), which is installed in each of the terminal of the delivery company (for example, the mobile terminal 20Ad of the deliverer or a terminal provided at the business office) and the terminal (for example, mobile terminals 20Aa, 20Ab) of the user. The dedicated application can be installed in each terminal by being provided to each terminal from the center server 30 (a company operating the center server 30) via an internet line or the like.

Specifically, the contact mediation unit 3211 may specify the user that is a requester from the luggage specified through the contact mediation request, and create a group chat in which the user and the delivery company are group members and the user and the delivery company can contact each other through, for example, a messaging function of a dedicated application with respect to the luggage. The contact mediation unit 3211 controls the key application activated in each terminal via the communication processing unit 3201 and transmits the message received from any one of the terminal of the delivery company and the terminal of the user through the messaging function or the like, to another terminal through push notification. Accordingly, the center server 30 can mediate the contact between the user and the delivery company without disclosing the information related to the privacy of the user (for example, an account of a general-purpose SNS, an e-mail address, or a telephone number) to the delivery company.

For example, the contact mediation unit 3211 may mediate the contact between the delivery company and the user through an SNS provided to be dedicated to the vehicle cabin delivery service (hereinafter referred to as a "dedicated SNS"). Specifically, the contact mediation unit 3211 may specify the user that is a requester from the luggage specified through the contact mediation request, and transmit the account of the user in the dedicated SNS to the delivery management server 50 via the communication processing unit 3201. The contact mediation unit 3211 may create a group chat in which the user and the delivery company can contact with each other through a messaging function of a dedicated SNS that links an account of the user to an account of the delivery company, for example, includes the user and the delivery company as group members. Accordingly, the center server 30 can mediate the contact between the user and the delivery company without disclosing the information related to the privacy of the user (for example, an account of a general-purpose SNS, an e-mail address, or a telephone number) to the delivery company.

On the other hand, even when the contact mediation request is received from the delivery management server 50 by the communication processing unit 3201, the contact mediation unit 3211 transmit a notification (a non-permission notification) indicating that contact between the delivery company and the user cannot be mediated to the delivery management server 50 via the communication processing unit 3201 when the contact aspect decision unit 3209 performs decision disabling the contact between the delivery company and the user.

The contact mediation unit 3211 may enable the contact using solely the contact means when the contact aspect decision unit 3209 performs decision enabling the contact using solely the contact means in an aspect restricting the contact between the delivery company and the user, instead of making decision disabling the contact between the delivery company and the user, as described above. For example, the contact mediation unit 3211 may restrict contact based on sound in the dedicated application using solely a prohibition message, as described above, according to the contact aspect decided by the contact aspect decision unit 3209. For example, the contact mediation unit 3211 may prohibit direct contact between the delivery company and the user using the dedicated application or the like as described above according to the contact aspect decided by the contact aspect decision unit 3209, and mediate contact information included in a request signal received from the delivery management server 50 by the communication processing unit 3201 to, for example, the mobile terminals 20Aa, 20Ab of the user according to the request signal.

When the contact aspect decision unit 3209 performs decision disabling the contact between the delivery company and the user due to the vehicle 10A being at the designated position as described above, the contact mediation unit 3211 may transmit a non-permission notification (hereinafter referred to as a "designated position notification" for convenience) indicating that the vehicle 10A is at the designated position to the delivery management server 50 via the communication processing unit 3201. Accordingly, the delivery company can ascertain that the vehicle 10A is at the designated position such that the delivery company cannot receive mediation of direct and relatively real-time contact between the delivery company and the user.

The processing device 23 of the mobile terminal 20Ac of a deliverer includes the communication processing unit 231, the communication processing unit 232, the authentication key acquisition unit 233, the authentication request unit 234, and the locking and unlocking request unit 235, as described above.

In the embodiment, the description will be given on the premise that the functions of the authentication key acquisition unit 233, the authentication request unit 234, and the locking and unlocking request unit 235 of the mobile terminal 20Ac are available to the owner user by the key application being activated.

The authentication key acquisition unit 233 transmits the authentication key acquisition request to the delivery management server 50 via the communication processing unit 232 according to a predetermined manipulation by a deliverer. In this case, the authentication key acquisition request includes the above-described delivery luggage information stored in the storage unit 230 in advance. Accordingly, the delivery management server 50 transmits an authentication key arrangement request to the center server 30 according to the authentication key acquisition request, the center server 30 distributes the authentication key to the mobile terminal 20Ac according to the authentication key arrangement request, and the mobile terminal 20Ac can acquire the authentication key. Therefore, the mobile terminal 20Ac can lock and unlock the trunk lid of the vehicle 10A based on the functions of the communication processing unit 231, the authentication request unit 234, and the locking and unlocking request unit 235, such that the deliverer can deliver the requested luggage to the trunk of the vehicle 10A, lock the trunk of the vehicle 10A, and return to the house.

### Details of Configuration Regarding C2C Car Sharing Service

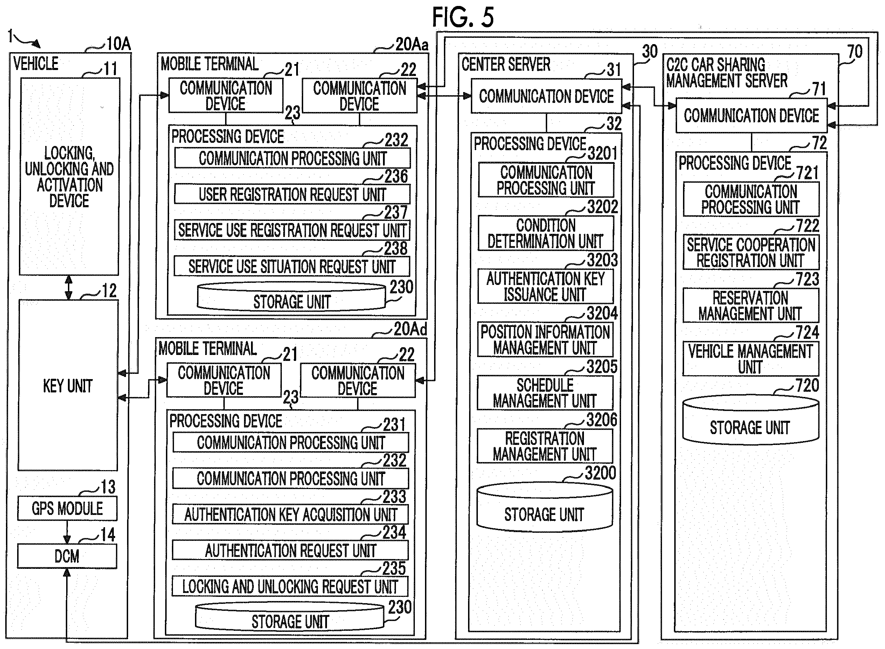

A configuration regarding a C2C car sharing service in the authentication key management system 1 will be described with reference to FIG. 5.

FIG. 5 is a diagram mainly illustrating an example of the configuration regarding the C2C car sharing service in the authentication key management system 1. Hereinafter, the configuration regarding the C2C car sharing service in the authentication key management system 1 will be mainly described with respect to FIG. 5, and duplicate description on the configuration overlapping the above-described configuration regarding the key sharing service or the like will be omitted as much as possible.

The processing device 23 of the mobile terminal 20Aa carried by the owner user of the vehicle 10A includes the communication processing unit 232, the user registration request unit 236, the service use registration request unit 237, and the service use situation request unit 238, as described above.

The user registration request unit 236 requests the center server 30 to register the regular user (a sub-user) of the vehicle 10A who uses various services including the C2C car sharing service according to a predetermined manipulation by the owner user, as described above.

The service use registration request unit 237 requests the center server 30 to perform the registration of use of various services including the C2C car sharing service for each registered regular user (the owner user or the sub-user) according to a predetermined manipulation by the owner user, as described above.

For example, the service use registration request unit 237 transmits, as the service link information, a service use registration request for using the C2C car sharing service including a service login ID of a website for a user who uses the C2C car sharing service corresponding to the C2C car sharing management server 70 (hereinafter referred to as a "C2C car sharing site"), which corresponds to the regular user of the vehicle 10A that is a registration target, to the center server 30.

The service use situation request unit 238 requests the center server 30 to provide information on a use situation of various services (service use situation information) including the C2C car sharing service of the regular user of the vehicle 10A for which the use registration has been performed, in a form corresponding to the owner user ID according to a predetermined manipulation by the owner user, as described above.

The C2C car sharing management server 70 includes a communication device 71 and a processing device 72.

The communication device 71 is any device that performs bidirectional communication with each of the mobile terminal 20 and the center server 30 over a predetermined communication network.

The processing device 72 includes, for example, a communication processing unit 721, a service cooperation registration unit 722, a reservation management unit 723, and a vehicle management unit 724 as functional units that are realized by executing one or more programs stored in the ROM or the auxiliary storage device on the CPU. The processing device 72 includes a storage unit 720 that is realized as a storage area of an auxiliary storage device or the like of the server computer.

Description will be given on the premise that the information for specifying the vehicle 10A that is a lending target has already been registered (stored) in the storage unit 720 in an aspect in which the information is linked to the service login ID via the C2C car sharing site by the regular user (the owner user) of the vehicle 10A.

The communication processing unit 721 controls the communication device 71 to perform transmission and reception of various signals such as control signals or information signals to and from each of the mobile terminal 20 and the center server 30.

The service cooperation registration unit 722 performs information registration for cooperation between the center server 30 regarding the use of the C2C car sharing service of the regular user of the vehicle 10A and the C2C car sharing management server 70 according to the service use registration completion notification received from the center server 30 by the communication processing unit 721.

For example, the service cooperation registration unit 722 adds a flag indicating a lender of the vehicle 10A the C2C car sharing service to the service login ID included in the service use registration completion notification in the user management DB that manages the user of the C2C car sharing site constructed in the storage unit 720. The C2C car sharing management server 70 transmits the authentication key arrangement request including the service login ID corresponding to the regular user of the vehicle 10A, which is the lender, to the center server 30 such that it is possible to cause the authentication key to be distributed from the center server 30 to the mobile terminal 20Ad of the borrower, as described below.

The reservation management unit 723 manages reservation of use of the vehicle 10A that is performed through the C2C car sharing site or the like.

For example, the reservation management unit 723 receives registration of a date and time on which the vehicle 10A is rentable from the regular user of the vehicle 10A through the C2C car sharing site and registers (stores) the received date and time on which the vehicle 10A is rentable in the storage unit 720. When the date and time on which the vehicle 10A is rentable is registered (stored) in the storage unit 720, the reservation management unit 723 inquires of the center server 30 about the car use schedule information via the communication processing unit 721. Accordingly, the reservation management unit 723 can acquire the latest vehicle use schedule information via the communication processing unit 721. Therefore, the C2C car sharing management server 70, for example, can take countermeasures such as requesting to change the date and time on which the vehicle 10A is rentable, which is received from the regular user of the vehicle 10A, or registering a portion excluding an overlapping portion from the date and time on which the vehicle 10A is rentable as the date and time on which the vehicle 10A is rentable when the received date and time on which the vehicle 10A is rentable already overlaps another schedule or registering.

For example, the reservation management unit 723 receives the reservation of use of the vehicle 10A within a range of the date and time on which the vehicle 10A is rentable, which is stored in the storage unit 720. When the reservation management unit 723 receives the reservation of use of the vehicle 10A from a user who is a borrower through the C2C car sharing site, the reservation management unit 723 updates information on a lending schedule of the vehicle 10A (lending schedule information) stored in the storage unit 720.

For example, when the authentication key acquisition request is received from the mobile terminal 20Ad of the borrower of the vehicle 10A by the communication processing unit 721, the reservation management unit 723 determines whether or not the authentication key acquisition request is a regular authentication key acquisition request. Specifically, the reservation management unit 723 may perform the determination based on the service login ID and the password of the C2C car sharing site included in the authentication key acquisition request, or a relationship regarding the date and time of reservation of use (for example, within a range of the date and time of reservation of use or less than a predetermined time until a date and time of use start). When the authentication key acquisition request is a regular authentication key acquisition request, the reservation management unit 723 transmits an authentication key arrangement request to the center server 30 via the communication processing unit 721. When the authentication key arrangement request is transmitted to the center server 30, information for specifying the mobile terminal 20Ad of the borrower of the vehicle 10A is included in the authentication key arrangement request. The information for specifying the borrower of the vehicle 10A may be, for example, an authentication ID (hereinafter referred to as a "borrower ID" for convenience) for obtaining user authentication in the center server 30 in order for the borrower of the vehicle 10A to use a function of the authentication key acquisition unit 233 of the mobile terminal 20Ad. Accordingly, the mobile terminal 20Ad of the borrower of the vehicle 10A can acquire the authentication key from the center server 30.

The vehicle management unit 724 manages the vehicle 10A that is a lending target.

For example, the vehicle management unit 724 inquires of the center server 30 about a current position information of the vehicle 10A via the communication processing unit 721 before the date and time of reservation of use of the vehicle 10A (for example, a period from tens of minutes ago to immediately before). The vehicle management unit 724 acquires the current position information of the vehicle 10A replied from the center server 30 according to the inquiry via the communication processing unit 721. Accordingly, a determination can be made as to whether or not the vehicle 10A returns to a designated place before a date and time of lending (a date and time of reservation of use) of the vehicle 10A. Accordingly, when the vehicle 10A does not return to the designated place, the C2C car sharing management server 70 can take countermeasures such as warning the regular user who is a lender of the vehicle 10A so that the vehicle 10A returns to the designated place through an e-mail or a predetermined application cooperating with the C2C car sharing site, which is installed in the mobile terminals 20Aa, 20Ab.

The processing device 32 of the center server 30 includes the communication processing unit 3201, the condition determination unit 3202, the authentication key issuance unit 3203, the position information management unit 3204, the schedule management unit 3205, the registration management unit 3206, and the storage unit 3200, as described above.

When the authentication key arrangement request is received from the C2C car sharing management server 70 by the communication processing unit 3201, the condition determination unit 3202 determines whether or not the authentication key arrangement request is a regular authentication key arrangement request. For example, the condition determination unit 3202 determines whether or not the authentication key arrangement request is the regular authentication key arrangement request based on the service link information included in the authentication key arrangement request (for example, the service login ID of the C2C car sharing site) or predetermined authentication information (for example, the ID and the password) corresponding to the C2C car sharing management server 70.

When the condition determination unit 3202 determines whether or not the authentication key arrangement request is a regular authentication key arrangement request, the authentication key issuance unit 3203 specifies the vehicle 10A corresponding to the authentication key arrangement request based on the user service registration information DB of the storage unit 3200. The authentication key issuance unit 3203 issues the authentication key in which a time is limited (for example, the vehicle is available solely at the date and time of reservation of use of the vehicle 10A included in the authentication key arrangement request and in a buffering period before and after the date and time of reservation of use of the vehicle 10A). The authentication key issuance unit 3203 distributes the authentication key to the mobile terminal 20Ad of the borrower of the vehicle 10A specified by the authentication key arrangement request via the communication processing unit 3201.

The C2C car sharing service may include, for example, a service (hereinafter referred to as "vehicle truck lending service" for convenience) in an aspect in which solely a trunk of the vehicle 10A is lent. In the case of a vehicle trunk lending service, the authentication key issuance unit 3203 may issue an authentication key with an authority limited so that locking and unlocking of the trunk lid are allowed. Accordingly, it is possible to limit a lending target of C2C car sharing to solely the trunk. By limiting the lending target of the C2C car sharing to solely the trunk, for example, a vehicle cabin delivery service in an aspect in which the trunk of the vehicle 10A to be lent at a travel destination is borrowed and a purchased product for use at a travel destination is delivered to the borrowed trunk can be realized.

The position information management unit 3204 transmits a position information request to the vehicle 10A via the communication processing unit 3201 according to the inquiry about the current position of the vehicle 10A from the C2C car sharing management server 70 received by the communication processing unit 3201. Accordingly, the position information management unit 3204 can acquire the current position information from the vehicle 10A via the communication processing unit 3201. The position information management unit 3204 replies the C2C car sharing management server 70 with the current position information acquired from the vehicle 10A via the communication processing unit 3201.

The schedule management unit 3205 transmits the latest vehicle use schedule information to the vehicle 10A via the communication processing unit 3201 according to the inquiry about the current position of the vehicle 10A from the C2C car sharing management server 70 received by the communication processing unit 3201.

The registration management unit 3206 performs registration of the regular user (the sub-user) who uses various services including the C2C car sharing service according to the user registration request received from the mobile terminal 20Aa of the owner user by the communication processing unit 3201, as described above. The registration management unit 3206 performs registration of use of the C2C car sharing service by the regular user of the vehicle 10A according to the service use registration request received from the mobile terminal 20Aa of the owner user by the communication processing unit 3201, as described above. When the registration of use of various services including the C2C car sharing service has been completed, the registration management unit 3206 notifies the mobile terminals 20Aa, 20Ab corresponding to the regular users that are registration targets that the registration of use of various services including the C2C car sharing service has been completed via the communication processing unit 3201, as described above. When the registration of use of the C2C car sharing service has been completed, the registration management unit 3206 transmits a service use registration completion notification including the service link information to the C2C car sharing management server 70 that performs an operation and management of a service that is a registration target via the communication processing unit 3201.

The processing device 23 of the mobile terminal 20Ad of the borrower of the vehicle 10A includes the communication processing unit 231, the communication processing unit 232, the authentication key acquisition unit 233, the authentication request unit 234, the locking and unlocking request unit 235, and the storage unit 230, as described above.

The authentication key acquisition unit 233 transmits an authentication key acquisition request to the C2C car sharing management server 70 via the communication processing unit 232 according to a predetermined manipulation by the borrower of the vehicle 10A. When the authentication key acquisition request is transmitted, the service login ID of the C2C car sharing site corresponding to the borrower of the vehicle 10A is included in the authentication key acquisition request. Accordingly, the C2C car sharing management server 70 can transmit an authentication key arrangement request to the center server 30 according to the authentication key acquisition request, the center server 30 can distribute the authentication key to the mobile terminal 20Ad according to the authentication key arrangement request, and the mobile terminal 20Ad can acquire the authentication key. Therefore, the mobile terminal 20Ad can lock and unlock the door of the vehicle 10A based on the functions of the communication processing unit 231, the authentication request unit 234, and the locking and unlocking request unit 235. That is, the borrower of the vehicle 10A carrying the mobile terminal 20Ad can directly use the vehicle 10A, such as locking and unlocking the vehicle 10A and driving the vehicle 10A using the mobile terminal 20Ad without performing exchange of a key with the regular user of the vehicle 10A through the C2C car sharing service. Similarly, the regular user of the vehicle 10A can lend the vehicle 10A to another person other than the regular user without exchanging the key. Therefore, it is possible to improve convenience in lending and borrowing of the vehicle 10A between the regular user of the vehicle 10A and another person other than the regular user through the C2C car sharing service in the authentication key management system 1.

### Details of Configuration Regarding B2C Car Sharing Service

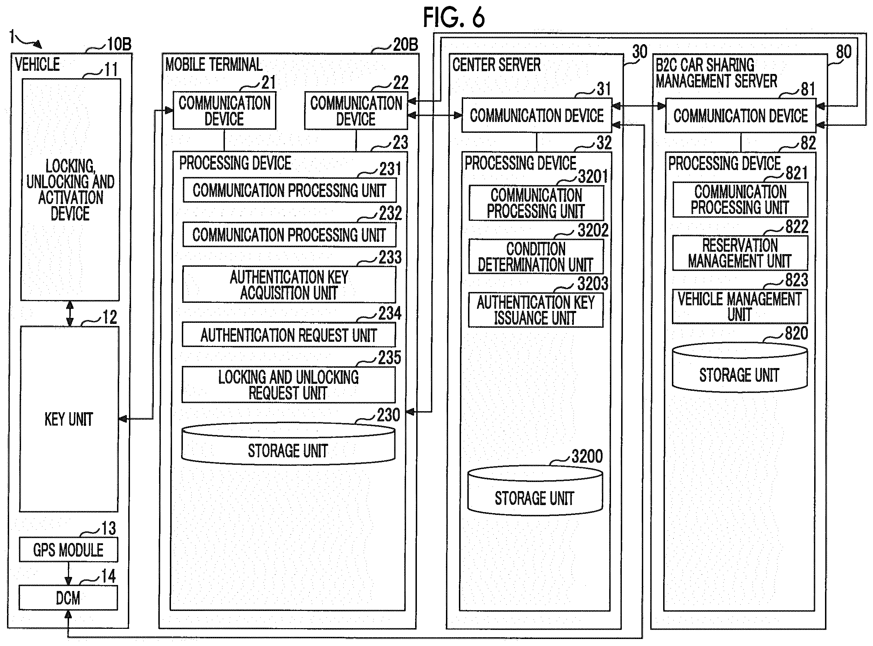

A B2C car sharing service in the authentication key management system 1 will be described with reference to FIG. 6.

FIG. 6 is a diagram mainly illustrating an example of the configuration regarding the B2C car sharing service in the authentication key management system 1. Hereinafter, the configuration regarding the B2C car sharing service in the authentication key management system 1 will be mainly described with respect to FIG. 6, and duplicate description on the configuration overlapping the above-described configuration regarding the key sharing service or the like will be omitted as much as possible.

The B2C car sharing management server 80 includes a communication device 81 and a processing device 82.

The communication device 81 is any device that performs bidirectional communication with each of the mobile terminal 20B and the center server 30 over a predetermined communication network.

The processing device 82 includes, for example, a communication processing unit 821, a reservation management unit 822, and a vehicle management unit 823 as functional units that are realized by executing one or more programs stored in the ROM or the auxiliary storage device on the CPU. The processing device 82 includes a storage unit 820 that is realized as a storage area of an auxiliary storage device or the like of the server computer.

The communication processing unit 821 controls the communication device 81 to perform transmission and reception of various signals such as control signals or information signals to and from each of the mobile terminal 20B and the center server 30.

The reservation management unit 822 manages the reservation of use of the vehicle 10B that is performed through the B2C car sharing site or the like.

For example, the reservation management unit 822 receives reservation of use of the vehicle 10B from a user (hereinafter referred to as "borrower user") who wants to borrow the vehicle 10B through a website that is operated by a company of the B2C car sharing management server 80 or the like (hereinafter referred to as a "B2C car sharing site" for convenience). The reservation management unit 822 stores information on the received reservation of use of the vehicle 10B (use reservation information) in the storage unit 820. When the information on use reservation is stored in the storage unit 820, for example, information for specifying the vehicle 10A that is a target, information on a date and time of reservation of use (a start date and time of use and an end date and time of use), and a service login ID of the borrower user in the B2C car sharing site may be included in the use reservation information.

For example, the reservation management unit 822 updates the information on the use schedule of the vehicle 10B (the vehicle use schedule information) stored in the storage unit 820 each time the reservation management unit 822 receives the reservation of use of the vehicle 10B. Accordingly, the B2C car sharing management server 80 can display the use schedule of the vehicle 10B on the B2C car sharing site to present a date and time when the reservation of use can be made, to the borrower user.

For example, when the authentication key request is received from the mobile terminal 20B by the communication processing unit 821, the reservation management unit 822 determines whether or not the authentication key request is a regular authentication key request. Specifically, the reservation management unit 822 may perform the determination based on the service login ID and the password of the B2C car sharing site corresponding to the borrower user included in the authentication key request, or a relationship regarding the date and time of reservation of use (for example, within a range of the date and time of reservation of use or less than a predetermined time until a date and time of use start). When the authentication key request is a regular authentication key acquisition request, the reservation management unit 822 transmits an authentication key arrangement request to the center server 30 via the communication processing unit 821. When the authentication key arrangement request is transmitted to the center server 30, information for specifying the mobile terminal 20B of the borrower user borrowing the vehicle 10B is included in the authentication key arrangement request. The information for specifying the borrower user borrowing the vehicle 10B may be, for example, an authentication ID (hereinafter referred to as a "borrower user ID" for convenience) for obtaining user authentication in the center server 30 in order for the borrower user borrowing the vehicle 10B to use a function of a key application corresponding to the authentication key acquisition unit 233 of the mobile terminal 20B or the like. Accordingly, the mobile terminal 20B of the borrower user borrowing the vehicle 10B can acquire the authentication key from the center server 30.

The vehicle management unit 823 manages the vehicle 10B that is a lending target.

For example, the vehicle management unit 823 inquires of the center server 30 about the vehicle 10B parked in the vicinity (for example, within hundreds of meters) of a place designated in the reservation of use via the communication processing unit 821 before the date and time of reservation of use of the vehicle 10B of a borrower user (for example, before tens of minutes). The vehicle management unit 823 acquires the position information of the vehicle 10B parked in the vicinity of the designated place replied from the center server 30 according to the inquiry via the communication processing unit 821. Accordingly, the vehicle management unit 823 can specify one or a plurality of vehicles 10B parked around the designated place and determine, for example, the vehicle 10B to be lent before the start date and time of use of the vehicle 10B of the borrower.

For example, the vehicle management unit 823 inquires of the center server 30 about the position information of the vehicle 10B in the designated area via the communication processing unit 821 according to a search request of the vehicle 10B in a designated area by the borrower user at the B2C car sharing site. The vehicle management unit 823 acquires the position information of the vehicle 10B in the designated area replied from the center server 30 according to the inquiry via the communication processing unit 821. Accordingly, the vehicle management unit 823, for example, can present the position information of the vehicle 10B that is a target to the borrower user who wants to borrow the vehicle 10B in the designated area immediately at the B2C car sharing site.

The processing device 32 of the center server 30 includes the communication processing unit 3201, the condition determination unit 3202, the authentication key issuance unit 3203, and the storage unit 3200, as described above.

When the authentication key arrangement request received from the B2C car sharing management server 80 is received by the communication processing unit 3201, the condition determination unit 3202 determines whether or not the authentication key arrangement request is a regular authentication key arrangement request. For example, the condition determination unit 3202 determines whether or not the authentication key arrangement request is the regular authentication key arrangement request based on whether or not the borrower user ID included in the authentication key arrangement request is the authentication ID already registered in the storage unit 3200, or on predetermined authentication information (for example, an ID Password) corresponding to the B2C car sharing management server 80.

When the condition determination unit 3202 determines whether or not the authentication key arrangement request is the regular authentication key arrangement request, the authentication key issuance unit 3203 issues the authentication key in which a time is limited (for example, the vehicle is available solely at the date and time of reservation of use of the vehicle 10B included in the authentication key arrangement request and in a buffering period before and after the date and time of reservation of use of the vehicle 10B). The authentication key issuance unit 3203 distributes the authentication key to the mobile terminal 20B of the borrower user borrowing the vehicle 10B specified by the authentication key arrangement request via the communication processing unit 3201.

The processing device 23 of the mobile terminal 20B of the borrower user borrowing the vehicle 10B includes the communication processing unit 231, the communication processing unit 232, the authentication key acquisition unit 233, the authentication request unit 234, the locking and unlocking request unit 235, and the storage unit 230, as described above.

The authentication key acquisition unit 233 transmits an authentication key acquisition request to the B2C car sharing management server 80 via the communication processing unit 232 according to a predetermined manipulation by the borrower user of the vehicle 10B. When the authentication key acquisition request is transmitted, the service login ID of the B2C car sharing site corresponding to the borrower user borrowing the vehicle 10B is included in the authentication key acquisition request. Accordingly, the B2C car sharing management server 80 can transmit an authentication key arrangement request to the center server 30 according to the authentication key acquisition request, the center server 30 can distribute the authentication key to the mobile terminal 20B according to the authentication key arrangement request, and the mobile terminal 20B can acquire the authentication key. Therefore, the mobile terminal 20B can lock and unlock the door of the vehicle 10B based on the functions of the communication processing unit 231, the authentication request unit 234, and the locking and unlocking request unit 235. That is, the borrower user borrowing the vehicle 10B carrying the mobile terminal 20B can directly use the vehicle 10B, such as locking and unlocking the vehicle 10B and driving the vehicle 10B using the mobile terminal 20B without performing exchange of a key with the company of the vehicle 10B through the B2C car sharing service. Therefore, it is possible to improve convenience for the borrower user borrowing the vehicle 10B through the B2C car sharing service in the authentication key management system 1.

### Characteristic Operation of Center Server

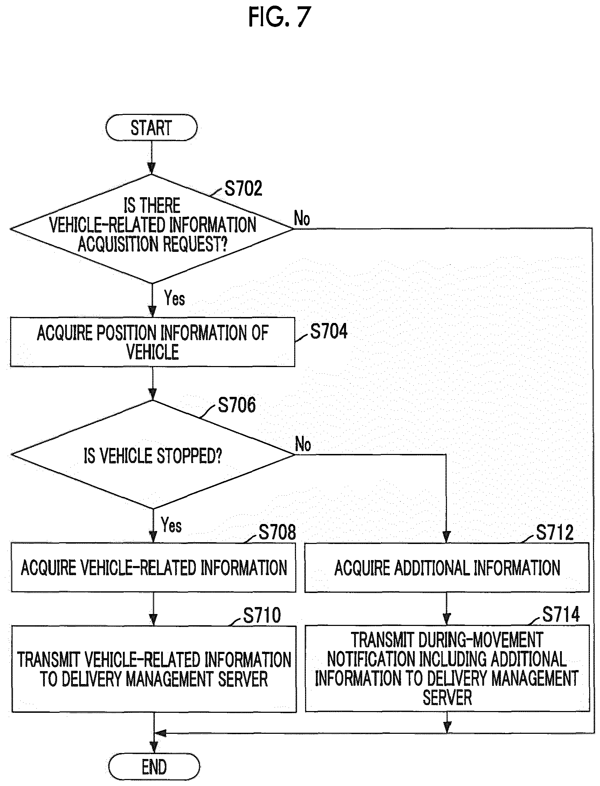

A characteristic operation of the center server 30, that is, a flow of a process in which the center server 30 provides the vehicle-related information to the delivery company (a vehicle-related information provision process), and a process of mediating the contact between the delivery company and the user (a contact mediation process) will be described with reference to FIGS. 7 to 10.

### Specific Example of Vehicle-Related Information Provision Process

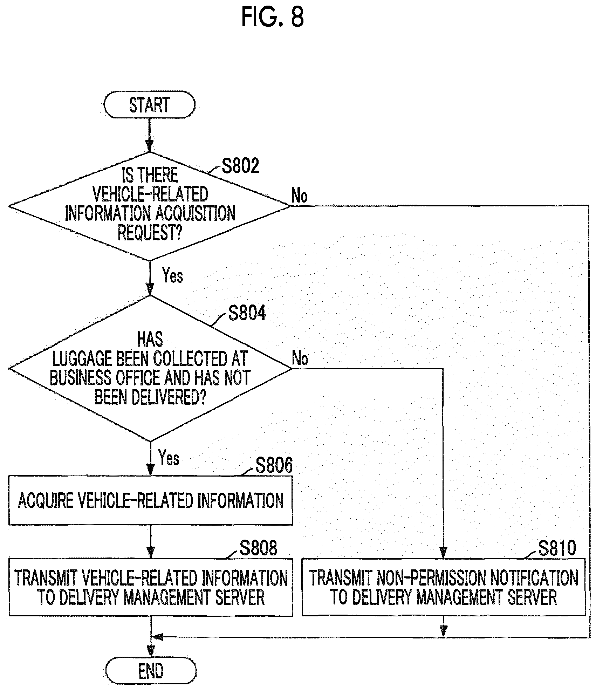

FIG. 7 is a flowchart schematically showing an example of the vehicle-related information provision process of the center server 30. The process according to this flowchart is repeatedly executed, for example, at predetermined control intervals. Hereinafter, the same applies to the flowcharts of FIGS. 8 to 10.

In step S702, the vehicle-related information provision unit 3210 determines whether or not the vehicle-related information acquisition request has been received from the delivery management server 50 by the communication processing unit 3201. When the vehicle-related information acquisition request is received from the delivery management server 50, the vehicle-related information provision unit 3210 proceeds to step S704, and otherwise, ends this process.

In step S704, the position information management unit 3204 acquires the position information of the vehicle 10A via the communication processing unit 3201. Specifically, the position information management unit 3204 acquires the position information of the vehicle 10A over a plurality of latest times.

In step S706, the information provision aspect decision unit 3208 decides whether or not the vehicle 10A is stopped based on the position information of the vehicle 10A (specifically, an immediately previous time-series change in the position information of the vehicle 10A). When the vehicle 10A is stopped, the information provision aspect decision unit 3208 proceeds to step S708. When the vehicle 10A is not stopped, that is, the vehicle 10A is moving, the information provision aspect decision unit 3208 proceeds to step S712.

In step S708, the vehicle-related information provision unit 3210 acquires vehicle-related information.

In step S710, the vehicle-related information provision unit 3210 transmits the vehicle-related information to the delivery management server 50 via the communication processing unit 3201, and ends this process.

On the other hand, in step S712, the vehicle-related information provision unit 3210 acquires additional information of the during-movement notification.

In step S714, the vehicle-related information provision unit 3210 transmits a during-movement notification (non-permission notification) including additional information to the delivery management server 50 via the communication processing unit 3201, and ends this process.

In the example, the center server 30 can suppress the concern over the privacy of the user by providing the vehicle-related information to the delivery management server 50 solely when the vehicle 10A is stopped, as described above.

The center server 30 can appropriately provide the vehicle-related information including the position information of the vehicle 10A to the delivery company in a situation in which the vehicle 10A is stopped and the vehicle 10A can be settled as the delivery destination by the delivery company. That is, the center server 30 can provide the vehicle-related information according to the needs of the delivery company.

FIG. 8 is a flowchart schematically showing another example of the vehicle-related information provision process of the center server 30.

Since step S802 is the same as step S702 in FIG. 7, description thereof will be omitted.

In step S804, the information provision aspect decision unit 3208 decides whether or not the luggage specified by the vehicle-related information acquisition request has already been collected at the business office and has not been delivered. When the luggage that is a target has already been collected at the business office and has not been delivered, the information provision aspect decision unit 3208 proceeds to step S806 and, otherwise, proceeds to step S810.

Since steps S806 and S808 are the same as steps S708 and S710 in FIG. 7, description thereof will be omitted.

On the other hand, in step S810, the vehicle-related information provision unit 3210 transmits a non-permission notification to the delivery management server 50 via the communication processing unit 3201, and ends this process.

As described above, in the example, the center server 30 can suppress the concern over the privacy of the user by providing the vehicle-related information to the delivery management server 50 solely in a process progress situation for luggage corresponding to a situation in which the vehicle-related information is needed for the delivery company (from collection of the luggage at the business office to delivery).

The center server 30 can appropriately provide the vehicle-related information including the position information of the vehicle 10A to the delivery company from collection of the luggage at the business office to delivery. That is, the center server 30 can provide the vehicle-related information according to the needs of the delivery company.

The process of FIG. 7 and the process of FIG. 8 may be appropriately combined. That is, the information provision aspect decision unit 3208 may decide the provision aspect of the vehicle-related information to the delivery company based on at least one of the position information of the vehicle 10A and the process progress situation for luggage. More specifically, when both the condition in step S706 of FIG. 7 and the condition in step S804 of FIG. 8 are satisfied, the contact aspect decision unit 3209 may perform decision to permit the vehicle-related information to be provided to the delivery company, and otherwise, to prohibit the provision of the vehicle-related information to the delivery company or limit the vehicle-related information to be provided.

### Specific Example of Contact Mediation Process

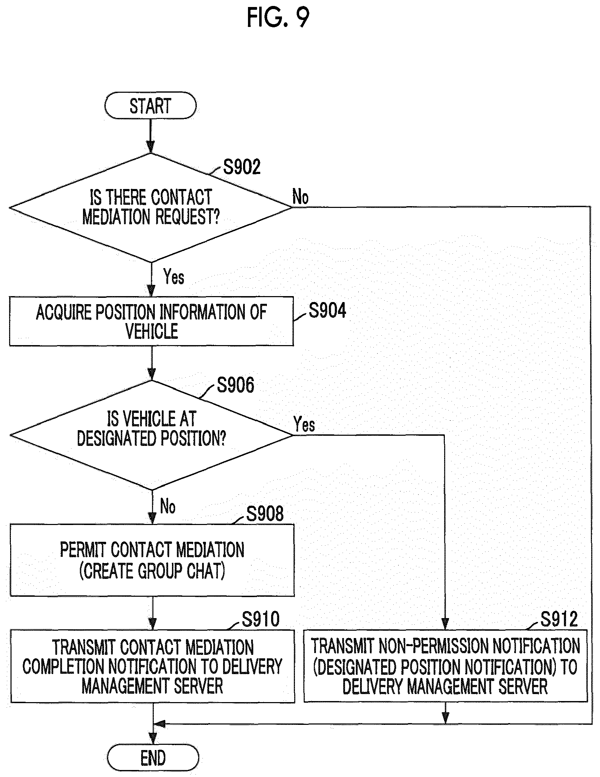

FIG. 9 is a flowchart schematically showing an example of a contact mediation process of the center server 30.

In step S902, the contact mediation unit 3211 determines whether or not a contact mediation request has been received from the delivery management server 50 by the communication processing unit 3201. When the contact mediation request is received from the delivery management server 50, the contact mediation unit 3211 proceeds to step S904 and, otherwise, ends this process.

Since step S904 is the same as step S704 in FIG. 7, description thereof will be omitted.

In step S906, the contact aspect decision unit 3209 decides whether or not the vehicle 10A is at the designated position designated by the user at the time of delivery request or the like. When the vehicle 10A is not at the designated position, the contact aspect decision unit 3209 proceeds to step S908 and, otherwise, proceeds to step S912.

In step S908, the contact mediation unit 3211 creates a group chat including the delivery company and a user corresponding to luggage that is a target, in a messaging function such as a dedicated application or dedicated SNS.

In step S910, the contact mediation unit 3211 transmits a contact mediation completion notification to the delivery management server 50 via the communication processing unit 3201, and ends this process.

On the other hand, in step S912, the contact mediation unit 3211 transmits a non-permission notification (or a designated position notification) to the delivery management server 50 via the communication processing unit 3201, and ends this processing.

As described above, in the example, the center server 30 can suppress the concern over the privacy of the user by providing the vehicle-related information to the delivery management server 50 solely when the vehicle 10A is not at the designated position.

The center server 30 can appropriately mediate contact between the delivery company and the user in a situation in which the vehicle 10A is not at the designated position and the delivery company needs to contact the user. That is, the center server 30 can mediate the contact between the delivery company and the user according to a need of the delivery company.

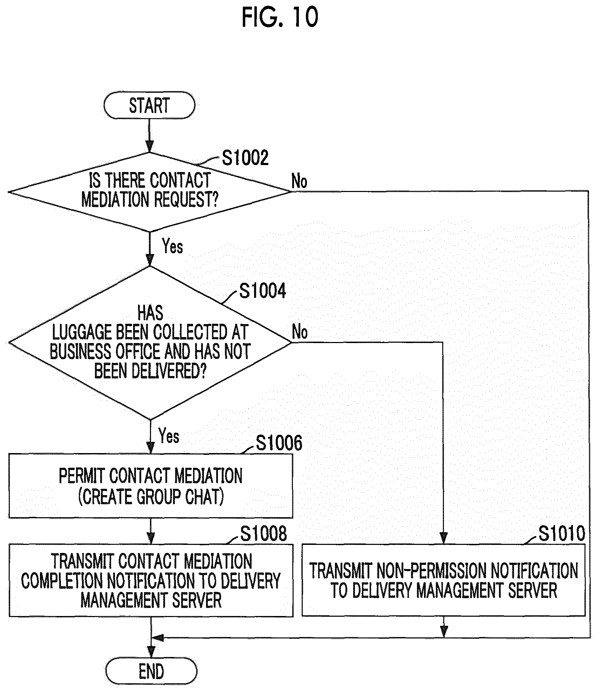

FIG. 10 is a flowchart schematically showing another example of the contact mediation process of the center server 30.

Since step S1002 is the same as step S902 in FIG. 9, description thereof will be omitted.

In step S1004, the contact aspect decision unit 3209 decides whether the luggage specified through the contact mediation request has already been collected at the business office and has not been delivered. When the luggage that is a target has already been collected at the business office and has not been delivered, the contact aspect decision unit 3209 proceeds to step S1006 and, otherwise, proceeds to step S1010.

Since steps S1006 and S1008 are the same as steps S908 and S910 in FIG. 9, description thereof will be omitted.

On the other hand, in step S1010, the contact mediation unit 3211 transmits a non-permission notification to the delivery management server 50 via the communication processing unit 3201, and ends this process.

As described above, in the example, the center server 30 can suppress the concern over the privacy of the user by mediating the contact between the delivery company and the user solely in a process progress situation for luggage corresponding to a situation in which contact with the user is needed for the delivery company (from collection of the luggage at the business office to delivery).

The center server 30 can appropriately mediate the contact between the delivery company and the user from collection of the luggage at the business office to delivery. That is, the center server 30 can provide the vehicle-related information according to a need of the delivery company.

The process of FIG. 9 and the process of FIG. 10 may be appropriately combined. That is, the contact aspect decision unit 3209 may decide the provision aspect of the vehicle-related information to the delivery company based on at least one of the position information of the vehicle 10A and the process progress situation for luggage. More specifically, the contact aspect decision unit 3209 may perform decision enabling the contact between the delivery company and the user without restriction when both of the condition in step S906 of FIG. 9 and the condition in step S1004 of FIG. 9 are satisfied, and prohibiting the contact between the delivery company and the user or restricting contact means to be provided, in other cases.

### Operation

In the embodiment, the center server 30 assists in the operation of the delivery service (vehicle cabin delivery service) in which the vehicle cabin the vehicle 10A used by the user can be designated as a delivery destination of luggage. Specifically, the decision unit (the information provision aspect decision unit 3208 and the contact aspect decision unit 3209) decides a provision aspect including at least one of whether or not the vehicle-related information is provided to the delivery company and the degree of limitation of the information to be provided, and a contact aspect including at least one of the availability of the contact between the delivery company and the user and the contact means, based on at least one of the position information of the vehicle 10A and the process progress situation for luggage in the vehicle cabin delivery service. The assistance unit (the vehicle-related information provision unit 3210 and the contact mediation unit 3211) provides information on the vehicle to the company according to the provision aspect decided by the decision unit, and mediates the contact between the company and the user according to the contact aspect decided by the decision unit.

Accordingly, the center server 30 can determine whether or not the provision of the information on the vehicle 10A or the contact with the user who is a requester is needed based on the position information of the vehicle 10A and the process progress situation for luggage. For example, in the vehicle cabin delivery service, when the vehicle 10A is moving, the center server 30 cannot settle whether the luggage is to be delivered to the vehicle 10A as a delivery destination. Therefore, in the situation described above, the center server 30 can determine that it is not needed for the vehicle-related information such as the position information of the vehicle 10A to be provided for the delivery company, based on the position information of the vehicle 10A. For example, when the vehicle 10A is at the designated position designated by the user, the center server 30 can determine that intentional contact with the user is not needed since the deliverer solely has to be directed to the designated position. Therefore, in the situation described above, the center server 30 can determine that the contact with the user is not needed for the deliverer company based on the position information of the vehicle 10A. For example, there is a situation in which a luggage delivery request has been made, but the luggage is not brought to the business office or the luggage has not been collected at the business office. Therefore, in the situation as described above, the center server 30 can determine that the vehicle-related information or the contact with the user is not needed for the delivery company, based on the process progress situation for the luggage in the delivery service. Therefore, the center server 30 can provide the vehicle-related information or mediate the contact with the user according to the vehicle-related information or the contact with the user is needed for the delivery company. Accordingly, the center server 30 can provide the needed vehicle-related information to the delivery company or mediate needed contact with the user, and the center server 30 can suppress a situation in which the vehicle-related information is provided to the delivery company or the delivery company contacts with the user when the vehicle-related information is not needed. Therefore, the center server 30 can cause a delivery service in which the inside of the vehicle 10A used by the user can be designated as the delivery destination of the luggage to be established while taking the privacy of the user into consideration.

Although both the information provision aspect decision unit 3208 and the contact aspect decision unit 3209 are provided in the embodiment, solely one of the information provision aspect decision unit 3208 and the contact aspect decision unit 3209 may be provided. Specifically, when any one of the aspect of the vehicle-related information provision unit 3210 providing the vehicle-related information to the delivery company and the contact aspect between the delivery company and the user performed by the contact mediation unit 3211 is fixed, any one of the information provision aspect decision unit 3208 and the contact aspect decision unit 3209 corresponding to the fixed aspect may be omitted.

In the embodiment, when the vehicle 10A is stopped, the information provision aspect decision unit 3208 decides that the vehicle-related information including the position information of the vehicle 10A is provided to the delivery company by the vehicle-related information provision unit 3210.

Accordingly, in the vehicle cabin delivery service, the center server 30 can provide the vehicle-related information including the position information of the vehicle 10A designated as the delivery destination to the delivery company solely when the vehicle 10A is stopped. Therefore, the center server 30 can specifically cause a delivery service in which the inside of the vehicle 10A used by the user can be designated as the delivery destination of the luggage to be established while taking the privacy of the user into consideration.

In this embodiment, the vehicle-related information provision unit 3210 that transmits a notification indicating that the vehicle 10A is moving, to a predetermined external device corresponding to a company when the vehicle 10A is moving is further included.

Accordingly, in a situation in which the center server 30 cannot provide the position information of the vehicle 10A or the like to the delivery company, the center server 30 can cause the delivery company to ascertain that the delivery company cannot receive information provision since the vehicle 10A is moving.

In the embodiment, the vehicle-related information provision unit 3210 transmits the position information on the place at which the vehicle 10A was last stopped to the delivery management server 50 via the communication processing unit 3201 when the vehicle 10A is moving.

Accordingly, the center server 30 can cause the delivery company to ascertain a place from which the vehicle 10A is moving, which is a starting point, in a situation in which the center server 30 cannot provide the position information of the vehicle 10A or the like to the delivery company.

In the embodiment, the vehicle-related information provision unit 3210 transmits information on whether or not the vehicle 10A is approaching the designated position designated by the user in advance, when the vehicle 10A is moving, to the delivery management server 50 via the communication processing unit 3201.

Accordingly, the center server 30 can cause the delivery company to ascertain whether or not the vehicle 10A is approaching the designated position in a situation in which the center server 30 cannot provide the position information of the vehicle 10A or the like to the delivery company. Therefore, for example, when the vehicle 10A is approaching the designated position, the vehicle is likely to be parked at the designated position, and therefore, the delivery company can settle the vehicle 10A as the delivery destination, for example, by changing the order of delivery. Accordingly, the center server 30 can achieve improvement of efficiency of the delivery work at the delivery company.

In the embodiment, the vehicle-related information provision unit 3210 transmits a scheduled time of arrival at the designated position to the delivery management server 50 via the communication processing unit 3201 when the vehicle 10A is moving and the vehicle 10A is approaching the designated position.

Accordingly, the center server 30 can cause the delivery company to ascertain the scheduled time of arrival at the designated position of the vehicle 10A in a situation in which the vehicle 10A is moving while approaching the designated position. Therefore, the delivery company can change, for example, the order of delivery according to the scheduled arrival time of the vehicle 10A. Therefore, the center server 30 can achieve improvement of efficiency of delivery work at the delivery company.

In the embodiment, the vehicle-related information provision unit 3210 transmits information on whether or not the vehicle 10A is at a place at which the vehicle 10A returns to the designated position to the delivery management server 50 in a designated delivery time period of the luggage via the communication processing unit 3201 when the vehicle 10A is moving and the vehicle 10A is away from the designated position.

Accordingly, the center server 30 can cause the delivery company to ascertain whether or not the vehicle 10A is at a place at which the vehicle 10A can return to the designated position in the designated delivery time period in a situation in which the vehicle 10A is moving away from the designated position. Therefore, for example, when the vehicle moves to a place at which the vehicle cannot come back in the designated delivery time period, the delivery company can exclude the vehicle 10A as the delivery destination and perform a determination as to, for example, whether or not re-delivery is performed. Therefore, the center server 30 can achieve improvement of efficiency of delivery work at the delivery company.

In the embodiment, the vehicle-related information provision unit 3210 transmits information on whether or not the vehicle 10A is within a delivery available area in the delivery service to the delivery management server 50 via the communication processing unit 3201 when the vehicle 10A is moving.

Accordingly, the center server 30 can cause the delivery company to ascertain whether or not the vehicle 10A is within the delivery available area in a situation in which the vehicle 10A is moving. Therefore, for example, when the vehicle 10A is out of the delivery available area, the delivery company can exclude the vehicle 10A as the delivery destination and perform a determination as to, for example, whether or not re-delivery is performed. Therefore, the center server 30 can achieve improvement of efficiency of delivery work at the delivery company.

In the embodiment, when the luggage is in a process from collection at the business office to delivery, the information provision aspect decision unit 3208 may decide that the vehicle-related information is provided to the delivery company by the vehicle-related information provision unit 3210, and the contact aspect decision unit 3209 performs decision enabling the contact between the delivery company and the user by the contact mediation unit 3211.

Accordingly, the center server 30 can specifically provide the vehicle-related information to the delivery company or mediate the contact between the delivery company and the user solely at a timing at which the vehicle-related information or contact with the user is needed for the delivery company, that is, in a situation in which the luggage is in a process from collection at the business office to delivery. Therefore, the center server 30 can specifically cause the vehicle cabin delivery service to be established while taking the privacy of the user into consideration.

In the embodiment, the function of the contact mediation unit 3211 mediating the contact between the delivery company and the user is provided to be dedicated to the vehicle cabin delivery service.

Accordingly, the center server 30 can mediate the contact between the delivery company and the user without disclosing privacy-related information such as a telephone number, an e-mail address, or an account of general-purpose SNS of the user to the delivery company. Accordingly, the center server 30 can mediate the contact between the delivery company and the user while further taking the privacy of the user into consideration.

In the embodiment, the contact mediation unit 3211 mediates the contact between the delivery company and the user using an application program provided to be dedicated to the vehicle cabin delivery service (the dedicated application), which is installed in each of the terminal corresponding to the delivery company and the terminal corresponding to the user.

Accordingly, the center server 30 can mediate the contact between the delivery company and the user, for example, through a messaging function in the dedicated application using a dedicated application installed in the terminals of both of the delivery company and the user. Accordingly, the center server 30 can specifically mediate the contact between the delivery company and the user while further taking the privacy of the user into consideration.

In the embodiment, the contact mediation unit 3211 provides an account of a user of an SNS provided to be dedicated to the vehicle cabin delivery service (a dedicated SNS) to the delivery company or links the account of the user to the account of the company (for example, creates a group chat including the accounts of the user and the company) to mediate the contact between the delivery company and the user.

Accordingly, the center server 30 can mediate the contact between the delivery company and the user without disclosing privacy-related information of the user such as an account of a general-purpose SNS of the user to the delivery company through the dedicated SNS provided to be dedicated to the vehicle cabin delivery service. Accordingly, the center server 30 can specifically mediate the contact between the delivery company and the user while further taking the privacy of the user into consideration.

In the embodiment, the contact aspect decision unit 3209 performs decision enabling contact from the delivery company to the user and decision enabling contact from the user to the delivery company in a period after delivery of the luggage is completed.

Accordingly, since the center server 30 prohibits the contact from the delivery company to the user after the completion of delivery, it is possible to protect the privacy of the user. On the other hand, since the center server 30 permits the contact from the user to the delivery company even after the delivery is completed, the center server 30 can cause the user to easily perform contact with the delivery company using the contact function, for example, when the user desires to perform inquiry about a delivery object. Therefore, the center server 30 can improve convenience for the user while taking the privacy of the user into consideration.

The embodiments for carrying out the present invention have been described in detail above, but the present invention is not limited to the specific embodiments as described above, and various modifications and changes can be performed without departing from the gist of the present invention described in the claims.

For example, in the embodiment described above, the mobile terminal 20 transmits the authentication request including the authentication key to the key unit 12, and the key unit 12 performs exchange of signals with the locking, unlocking and activation device 11 according to an authentication result based on the authentication key. Therefore, the locking and unlocking of the doors of the vehicle 10A by the locking, unlocking and activation device 11 and the activation of the vehicle 10A are realized, but the present invention is not limited to the above aspect.

Specifically, a configuration in which the function of the key unit 12 is transferred to the mobile terminal 20, and the mobile terminal 20 performs exchange of signals based on the above-described key information (internal key information) with the vehicle 10 (the locking, unlocking and activation device 11) using the LF radio waves and the RF radio waves such that the locking and unlocking of the doors of the vehicle 10A and the activation of the vehicle 10A by the locking, unlocking and activation device 11 are realized may be adopted. In this case, the "authentication key" of the embodiment described above may be read as the "key information". That is, the center server 30 may issue the key information instead of the authentication key and distribute the key information to the mobile terminal 20 in the same method as in the authentication key in the above-described embodiment. Accordingly, the same operation and effects as those of the above-described embodiment can be obtained.

The functions of the key unit 12 may be integrated with the locking, unlocking and activation device 11, and a configuration regarding communication between the locking, unlocking and activation device 11 and the key unit 12 and authentication related to the communication (the LF radio wave transmitter 111, the RF radio wave receiver 112, the collating ECU 113, the LF radio wave receiver 121, and the RF radio wave transmitter 122) may be omitted. In this case, when the authentication of the mobile terminal 20 based on the authentication key has been successful, the key ECU 124 may directly output an unlocking command or a locking command and an activation command to each of the body ECU 114 and the engine ECU 116 instead of the collating ECU 113, and perform locking and unlocking the doors of the vehicle 10 and activation of the vehicle 10. Accordingly, the same operation and effects as those of the above-described embodiment can be obtained.

In the embodiments and the modification examples described above, the target of locking and unlocking using the transmission signal (an authentication signal or the like) transmitted from the mobile terminal is the vehicle, but the present invention is not limited to this aspect. The vehicle according to the embodiments and the modification examples described above may be replaced with a building or a facility that is used by a user, such as a house, a villa, or a conference room.

Specifically, the vehicle cabin delivery service, the vehicle cabin collection service, or the vehicle cabin recovery service may be replaced with a delivery service, a collection service, or recovery service in which the inside of a building (for example, a house or a private villa) or a facility (for example, a rental villa or a conference room) that is used by a user can be designated as a delivery destination, a collection source, or a recovery source of luggage or products. In this case, the "inside of the facility" means a place at which invasion from the outside is prevented through locking at the facility, and may include not only the inside of a building of the facility but also, for example, a place at which a roof is not provided, on the inner side of a relatively high outside fence partitioning the facility.

In this case, a functional unit corresponding to the vehicle-related information provision unit 3210 may transmit information on a building or a facility in response to a request from the delivery management server 50. The information on the building or the facility may include, for example, information on features (a shape, a color, or the like) of a structure or an appearance of the building or the facility, or information on a place of a door that is a target of locking and unlocking of the building or the facility. The functional unit corresponding to the information provision aspect decision unit 3208 or the contact aspect decision unit 3209 may perform decision of an aspect of provision of information on the building or the facility to the delivery management server or an aspect of the contact between the delivery company and the user based on a process progress situation for luggage in a service for delivery to a house or the like (for example, whether or not the luggage is in a process from collection at the business office to delivery), as described above. Accordingly, it is possible to cause a delivery service (the service for delivery to a house or the like) in which the inside of the building or the facility used by the user can be designated as the delivery destination of luggage to be established while taking the privacy of the user into consideration, as in the above-described embodiment.

The C2C car sharing service may be replaced with a C2C sharing service that assists in lending and borrowing of some or all rooms of a privately own house or villa between individuals. Accordingly, it is possible to realize sharing of part or all of a privately own house, villa, or the like between individuals.

The B2C car sharing service may be replaced with a B2C sharing service in which a facility (for example, a condominium, a conference room, or a gymnasium) that can be used by a plurality of users in different time periods, which is owned by a company, an organization, or the like is lent to a user. Accordingly, sharing among general consumers of a facility that a plurality of users can use in different time periods, which is owned by a company, an organization, or the like, can be realized.

## Claims

1. A delivery assistance device (30) that assists in a delivery service in which a cabin of a vehicle (10) used by a user is designated as a delivery destination of luggage, the delivery assistance device comprising:
a decision unit (3208, 3209) configured to decide at least one of (i) a provision aspect including at least one of (a) whether or not information on the vehicle (10) is provided to a company operating the delivery service and (b) a degree of limitation on the information to be provided and (ii) a contact aspect including at least one of (a) whether or not contact between the company and the user is available and (b) a contact method between the company and the user, based on at least one of position information of the vehicle (10) and a progress situation for the luggage in a process of the delivery service; and
an assistance unit (3210, 3211) configured to perform at least one of (i) providing information on the vehicle (10) to the company according to the provision aspect decided by the decision unit (3208, 3209) and (ii) mediating contact between the company and the user according to the contact aspect decided by the decision unit (3208, 3209).

2. The delivery assistance device (30) according to claim 1, wherein the decision unit (3208, 3209) is configured to decide that the assistance unit (3210, 3211) provides position information of the vehicle (10) to the company when the vehicle (10) is stopped.

3. The delivery assistance device (30) according to claim 2, further comprising a transmission unit (3210) configured to transmit a notification to a predetermined external device belonging to the company when the vehicle (10) is moving, the notification indicating that the vehicle (10) is moving .

4. The delivery assistance device (30) according to claim 3, wherein the transmission unit (3210) transmits position information of a place at which the vehicle (10) has last been stopped, to the external device when the vehicle (10) is moving.

5. The delivery assistance device (30) according to claim 3 or 4, wherein the transmission unit (3210) transmits information in advance to the external device when the vehicle (10) is moving, the information indicating to whether or not the vehicle (10) is approaching a position designated by the user.

6. The delivery assistance device (30) according to claim 5, wherein the transmission unit (3210) is configured to transmit a scheduled time of arrival to the external device when the vehicle is scheduled to arrive at the position designated by the user, the vehicle (10) is moving, and the vehicle (10) is approaching the position designated by the user.

7. The delivery assistance device (30) according to claim 5 or 6, wherein the transmission unit (3210) is configured to transmit information to the external device when the vehicle (10) is moving and the vehicle (10) is away from the position designated by the user, the information relating to whether or not the vehicle (10) is able to return to the position designated by the user within a designated delivery time period of the luggage.

8. The delivery assistance device (30) according to any one of claims 3 to 7, wherein the transmission unit (3210) transmits information to the external device when the vehicle (10) is moving, the information indicating whether or not the vehicle (10) is within a delivery available area in the delivery service.

9. A delivery assistance device (30) that assists in a delivery service in which an inside of a vehicle, a building, or a facility used by a user is designated as a delivery destination of luggage, the delivery assistance device comprising:
a decision unit (3208, 3209) configured to decide at least one of (i) a provision aspect including at least one of (a) whether or not information on the vehicle, the building, or the facility is provided to a company operating the delivery service and (b) a degree of limitation on the information to be provided and (ii) a contact aspect including at least one of (a) whether or not contact between the company and the user is available and (b) a contact method between the company and the user, based on a progress situation for the luggage in a process of the delivery service; and
an assistance unit (3210, 3211) configured to perform at least one of (i) providing information on the vehicle, the building, or the facility to the company according to the provision aspect decided by the decision unit (3208, 3209) and (ii) mediating contact between the company and the user according to the contact aspect decided by the decision unit (3208, 3209).

10. The delivery assistance device (30) according to claim 9, wherein the decision unit (3208, 3209) is configured to decide at least one of providing the information on the vehicle, the building, or the facility to the company by the assistance unit (3210, 3211) and allowing the contact between the company and the user by the assistance unit (3210, 3211), during a period from a collection time when the luggage is collected at a business office to a delivery time when the luggage is delivered.

11. The delivery assistance device (30) according to claim 10, wherein a function of the assistance unit (3210, 3211) mediating the contact between the company and the user is provided to be dedicated to the delivery service.

12. The delivery assistance device (30) according to claim 11, wherein the assistance unit (3210, 3211) mediates the contact between the company and the user using an application program provided to be dedicated to the delivery service, the application program being installed in each of a company terminal belonging to the company and a user terminal belonging to the user.

13. The delivery assistance device (30) according to claim 11 or 12, wherein the assistance unit (3210, 3211) provides an account of the user of a social networking service provided to be dedicated to the delivery service to the company or links the account of the user to an account of the company to mediate contact between the company and the user.

14. The delivery assistance device (30) according to any one of claims 10 to 13, wherein the decision unit (3208, 3209) decides to prohibit the company to contact the user and decides to allow the user to contact the company, after the luggage has been delivered.

15. A delivery assistance method that is executed by a delivery assistance device (30) that assists in a delivery service in which an inside of a vehicle (10), a building, or a facility used by a user is designated as a delivery destination of luggage, the delivery assistance method comprising:
deciding at least one of (i) a provision aspect including at least one of (a) whether or not information on the vehicle (10), the building, or the facility is provided to a company operating the delivery service and (b) a degree of limitation on the information to be provided and (ii) a contact aspect including at least one of (a) whether or not contact between the company and the user is available and (b) a contact method between the company and the user, based on a progress situation for the luggage in a process of the delivery service; and
performing at least one of (i) providing information on the vehicle (10), the building, or the facility to the company according to the provision aspect decided in the deciding and (ii) mediating contact between the company and the user according to the contact aspect decided in the deciding.

16. A non-transitory computer-readable storage medium storing a delivery assistance program causing a delivery assistance device (30) to execute the delivery assistance method according to claim 15.

17. A delivery assistance method that is executed by a delivery assistance device (30) that assists in a delivery service in which a cabin of a vehicle (10) used by a user is designated as a delivery destination of luggage, the delivery assistance method comprising:
deciding at least one of (i) a provision aspect including at least one of (a) whether or not information on the vehicle (10) is provided to a company operating the delivery service and (b) a degree of limitation on the information to be provided and (ii) a contact aspect including at least one of (a) whether or not contact between the company and the user is available and (b) a contact method between the company and the user, based on at least one of position information of the vehicle (10) and a progress situation for the luggage in a process of the delivery service; and
performing at least one of (i) providing information on the vehicle (10) to the company according to the provision aspect decided in the deciding and (ii) mediating contact between the company and the user according to the contact aspect decided in the deciding.

18. A non-transitory computer-readable storage medium storing a delivery assistance program causing a delivery assistance device (30) to execute the delivery assistance method according to claim 17.
